# EUROPEAN PATENT APPLICATION

(11) **EP 4 460 143 A1**
(43) Date of publication of application: **06.11.2024**
(21) Application number: 23745895.5
(22) Date of filing: 09.01.2023
(51) Int. Cl.: H04W 74/08

(54) **COVERAGE ENHANCEMENT PROCESSING METHOD AND RELATED DEVICE**

(30) Priority: 27.01.2022 CN 202210104950
(71) Applicant: Huawei Technologies Co., Ltd., Shenzhen, Guangdong 518129 (CN)
(72) Inventor: FAN, Qiang, Shenzhen, Guangdong 518129 (CN); YOU, Chunhua, Shenzhen, Guangdong 518129 (CN)
(74) Representative: MERH-IP Matias Erny Reichl Hoffmann Patentanwälte PartG mbB
(86) International application number: PCT/CN2023/071345
(87) International publication number: WO 2023/143012

(57) **Abstract**

This application discloses a coverage enhancement processing method and a related device. The method may be applied to a terminal device, and includes: determining a first RACH resource used for a current round of random access, where the first RACH resource includes a first random access preamble, a quantity N of repeated transmissions of the first preamble, and a first physical random access channel PRACH resource required for transmission of the first preamble each time, the first PRACH resource is located on a first transmission channel, and the first transmission channel is located on an unlicensed spectrum; before each attempt to perform transmission of the first preamble, performing listen before talk LBT detection on the first transmission channel on which the first PRACH resource is located; and when the LBT detection succeeds once, performing transmission of the first preamble once by using the first PRACH resource. In this application, a random access success rate can be increased, a random access delay can be reduced, and user experience can be ensured.

## Description

This application claims priority to Chinese Patent Application No. 202210104950.3, filed with the China National Intellectual Property Administration on January 27, 2022 and entitled "COVERAGE ENHANCEMENT PROCESSING METHOD AND RELATED DEVICE", which is incorporated herein by reference in its entirety.

### TECHNICAL FIELD

This application relates to the field of communication technologies, and in particular, to a coverage enhancement processing method and a related device.

### BACKGROUND

In a communication system, a random access procedure is one of the most basic and important procedures. Using the random access procedure, a terminal device can achieve uplink synchronization, obtain a unique identifier (cell-radio network temporary identifier (Cell-Radio Network Temporary Identifier, C-RNTI)) of the terminal device in a cell, and establish a radio resource control (Radio Resource Control, RRC) connection. Random access is a necessary procedure of establishing a wireless link between the terminal device and a network. Data exchange can be normally performed between an access network device and the terminal device only after the random access is completed. With continuous development and evolution of communication technologies, there are ever-decreasing available spectrum resources of a communication system. Due to shortage of licensed spectrums, all parties in the industry automatically attach focus on unlicensed spectrums. In addition, communication-related protocol versions are continuously updated, and finally the Rel-16 protocol version supports operations on the unlicensed spectrums. This greatly alleviates scarcity of available spectrum resources. In an actual communication process, cells that use unlicensed spectrums for operations are referred to as new radio-unlicensed cells. In the new radio-unlicensed cells, various terminal devices may contend for resources in unlicensed frequency bands using a listen before talk (listen before talk, LBT) (or detect before send) mechanism. When a terminal device needs to establish a wireless link to a network, the terminal device may contend for, using the LBT detection mechanism, a resource used for initiating random access, and complete a random access procedure by using the resource. This can implement normal data exchange by using an unlicensed spectrum resource.

However, although the prior-art method in which a terminal device contends for an unlicensed spectrum resource through LBT detection for random access can greatly alleviate scarcity of available spectrum resources, problems of a low success rate and a large delay in a random access procedure may exist, resulting in poor user experience. Therefore, for a scenario of using unlicensed spectrum resource for communication, how to provide a random access solution with a high success rate and a small delay is an urgent problem to be resolved.

### SUMMARY

Embodiments of this application provide a coverage enhancement processing method and a related device, to increase a random access success rate and reduce a delay in a random access procedure, so as to ensure user experience.

According to a first aspect, an embodiment of this application provides a coverage enhancement processing method, applied to a terminal device. The method may include: determining a first RACH resource used for a current round of RACH, where the first RACH resource includes a first random access preamble preamble, a quantity N of repeated transmissions of the first preamble, and a first physical random access channel PRACH resource required for transmission of the first preamble each time, the first PRACH resource is located on a first transmission channel, the first transmission channel is located on an unlicensed spectrum, and N is an integer greater than 1; before each attempt to perform transmission of the first preamble, performing listen before talk LBT detection on the first transmission channel on which the first PRACH resource is located; and when the LBT detection succeeds once, performing transmission of the first preamble once by using the first PRACH resource.

In this embodiment of this application, in a process of initiating one round of random access by using an unlicensed spectrum resource, the terminal device may perform multiple random access preamble preamble repeated transmissions. Before each attempt for preamble transmission, the terminal device may first perform LBT detection on a transmission channel, to be specific, may perform multiple LBT detections on the transmission channel in one round of random access procedure. Because a busy or idle mode of the transmission channel is random, and multiple preamble transmission opportunities correspond to the multiple LBT detections, it is more likely to sense that the transmission channel is idle and occupy the transmission channel to send the preamble. This increases a success rate of the current round of random access, reduces a random access delay, and ensures user experience. Specifically, when the terminal device needs to perform communication by using the unlicensed spectrum resource, the terminal device first determines a random access preamble preamble (for example, the first preamble) used for the current round of random access, a quantity N of repeated transmissions of the preamble, and a physical random access channel (Physical Random Access Channel, PRACH) (for example, the first PRACH) required for transmission of the preamble. Then, before performing transmission of the preamble each time, the terminal device first performs LBT detection on a transmission channel on which the PRACH is located. When the LBT detection succeeds, the terminal device may perform transmission of the preamble once through the PRACH. This is different from the conventional technology in which a terminal device performs transmission of a preamble in a process of initiating one round of random access; and if an LBT detection failure occurs before the preamble transmission, the terminal device directly reselects a resource for a next round of random access. In this case, that the terminal device directly reselects a RACH resource and then initiates a next round of RACH attempt based only on one LBT detection failure increases a delay in a RACH process, and deteriorates user experience. In conclusion, in this embodiment of this application, in the process of initiating one round of random access by using the unlicensed spectrum resource, the terminal device performs multiple preamble repeated transmissions. If LBT detection for one preamble transmission attempt fails, the LBT detection continues to be performed for a next preamble transmission attempt. However, in the conventional technology, only one preamble transmission attempt is performed in one round of random access procedure, and a RACH resource is reselected if the LBT detection fails. In this embodiment of this application, the conventional-technology process in which a resource is directly reselected after one LBT detection is improved to a process in which multiple LBT detections are performed for multiple preamble transmission opportunities. In other words, time for RACH resource reselection is spent on performing LBT detection. Because the busy or idle mode of the transmission channel is random, it is more likely to sense, through multiple detections, that the transmission channel is idle and occupy the transmission channel to send the preamble. In addition, preamble repeated transmission can effectively avoid a problem that the random access fails because the access network device cannot receive the preamble at a time. Therefore, this can increase the success rate of the current round of random access, reduce the random access delay, and ensure user experience.

In a possible implementation, the method further includes: when the LBT detection fails once, stopping the attempt to perform transmission of the first preamble.

In this embodiment of this application, before performing transmission of the preamble each time, the terminal device may first perform LBT detection on the transmission channel. If the LBT detection fails, the terminal device may stop this preamble transmission attempt. In other words, when the LBT detection fails (to be specific, the transmission channel is in a busy mode), the terminal device quits the preamble transmission attempt, and proceeds with a next preamble transmission attempt in the current round of random access. This can effectively improve efficiency of the current round of random access.

In a possible implementation, the method further includes: when detection results for the multiple LBT detections meet a preset condition, reselecting a second RACH resource for a next round of RACH attempt.

In this embodiment of this application, in the process of initiating one round of random access by using the unlicensed spectrum resource, the terminal device may attempt to perform multiple preamble repeated transmissions. LBT detection needs to be performed on the transmission channel before each transmission. The terminal device may perform statistics collection on a result for each LBT detection. When a statistical result meets a specific condition (for example, a quantity of LBT detection failures reaches a specific quantity or a specific proportion), it may be considered that transmission channel contention is excessively fierce or transmission channel quality is poor. A RACH resource is reselected in time for a next round of random access attempt, to avoid increasing a delay in a random access procedure due to long-time invalid attempts.

In a possible implementation, the terminal device includes a medium access control MAC layer and a physical layer; and the performing listen before talk LBT detection on the first transmission channel on which the first PRACH resource is located includes: indicating, using the MAC layer, the physical layer to perform LBT detection on the first transmission channel on which the first PRACH resource is located.

In this embodiment of this application, in the process of initiating one round of random access by using the unlicensed spectrum resource, before each attempt to perform transmission of the preamble, the terminal device may indicate, using the medium access control (Medium Access Control, MAC) layer, the physical layer to perform LBT detection on the transmission channel. The terminal device allocates an LBT detection task to the physical layer, to effectively reduces complexity of the terminal device.

In a possible implementation, the method further includes: receiving, using the MAC layer, the detection results for the multiple LBT detections fed back by the physical layer, and performing statistics collection; and the reselecting a second RACH resource for a next round of RACH attempt includes: reselecting the second RACH resource using the MAC layer, and indicating the physical layer to perform the next round of RACH attempt.

In this embodiment of this application, in a process of performing statistics collection on the results for the multiple LBT detections, the terminal device may feed back the results for the multiple LBT detections to the MAC layer using the physical layer, and the MAC layer performs statistics collection on the results for the multiple LBT detections. The MAC layer may determine whether a statistical result meets a preset condition (for example, a quantity of LBT detection failures reaches a specific quantity or a specific proportion), to determine whether to reselect the RACH resource and initiate the next round of random access attempt. Based on the example in this embodiment of this application, the terminal device may allocate an LBT detection task to the physical layer, and allocate a statistics collection task of the LBT detection results to the MAC layer, so that device complexity of the terminal device can be effectively reduced.

In a possible implementation, the method further includes: performing statistics collection on the detection results for the multiple LBT detections using the physical layer, and feeding back a statistical result to the MAC layer; and the reselecting a second RACH resource for a next round of RACH attempt includes: reselecting the second RACH resource using the MAC layer, and indicating the physical layer to perform the next round of RACH attempt.

In this embodiment of this application, in a process of performing statistics collection on the results for the multiple LBT detections, the terminal device may perform statistics collection on the results for the multiple LBT detections using the physical layer, and feed back a statistical result to the MAC layer. Then, the MAC layer determines, based on the statistical result for the multiple LBT detections, whether to reselect the RACH resource, and initiate the next round of random access attempt. Based on the example in this embodiment of this application, the terminal device may allocate tasks of LBT detection and detection result statistics collection to the physical layer, and the MAC layer only needs to determine, based on the statistical result fed back by the physical layer, whether to determine to reselect the RACH. In this process, the physical layer needs to feed back the LBT detection statistical result only once to the MAC layer. This can effectively reduce inter-layer signaling interaction, and reduce resource overheads.

In a possible implementation, the preset condition includes any one of the following conditions: a quantity of LBT detection failures in the statistical result reaches a first preset threshold, where the first preset threshold is N; a quantity of LBT detection failures in the statistical result reaches a second preset threshold, where the second preset threshold is M, and M is an integer greater than 0 and less than N; or a proportion of LBT detection failures in the statistical result reaches a preset proportion K, where the failure proportion K is a quotient of a quantity of LBT detection failures and a total quantity of LBT detections, and K is greater than 0 and less than or equal to 1.

In this embodiment of this application, after the terminal device completes multiple preamble repeated transmissions in the current round of random access, if a statistical result for the multiple LBT detections meets the preset condition, the preset condition may be that the N LBT detections all fail, or M failures occur in the N LBT detections, or X failures occur in the N LBT detections, and a quotient of X and N reaches the proportion K. In this case, it may be considered that transmission channel contention is excessively fierce or transmission channel quality is poor (even if a few LBT detections succeed, a sent preamble may not be received by the access network device), so that a RACH resource is reselected in time to start a next round of random access attempt, to avoid increasing a delay in a random access procedure due to long-time invalid attempts.

In a possible implementation, the reselecting a second RACH resource includes: determining the second RACH resource used for the next round of random access RACH, where the second RACH resource includes a second random access preamble preamble, a quantity N+n of repeated transmissions of the second preamble, and a second physical random access channel PRACH resource required for transmission of the second preamble, and n is an integer greater than or equal to 0.

In this embodiment of this application, after the terminal device fails to perform multiple preamble repeated transmissions in a round of random access procedure, the terminal device may reselect a RACH resource for a next round of random access attempt. When the terminal device reselects the RACH resource, a quantity of preamble repeated transmissions in the current round of random access may be increased based on a quantity of times in a previous round, to increase a quantity of LBT detections on a transmission channel in a current round of random access procedure. This increases a success rate of the current round of random access, avoids increasing a random access delay, and ensures user experience.

In a possible implementation, the method further includes: receiving an indication message sent by the access network device, where the indication message indicates the terminal device to initiate contention-free random access CFRA that is based on preamble repeated transmission, the indication message includes one or more of the following: RACH resource configuration information, preamble repeated transmission enabling information, and information about a quantity of preamble repeated transmissions, and a RACH resource configured by using the RACH resource configuration information is located on an unlicensed spectrum.

In this embodiment of this application, the access network device may indicate, through configuration, the terminal device to perform contention-free random access (Contention-Free Random Access, CFRA) of preamble repeated transmission, so that an increase of a random access success rate and a decrease of a delay are ensured.

In a possible implementation, the indication message further includes beam switching information, and the beam switching information indicates the terminal device to perform preamble repeated transmission through beam switching.

In this embodiment of this application, the access network device may indicate, through configuration, the terminal device to complete multiple preamble repeated transmissions through beam switching, to further improve a random access success rate and reduce a delay.

In a possible implementation, the method further includes: when a random access response RAR message sent by the access network device is received, stopping the current round of random access attempt.

In this embodiment of this application, after the LBT detection succeeds once, the terminal device may perform preamble transmission once through the transmission channel, and start a random access response (Random Access Response, RAR) window to monitor an RAR. Due to a transmission channel quality problem (where a sent preamble may not be received by the access network device) and a downlink delay problem, the terminal device usually does not receive the RAR immediately after sending the preamble once. Therefore, the terminal device may perform LBT detection on the transmission channel again after sending the preamble once, and attempt to continue to send the preamble for a next time. In a subsequent attempt process, the terminal device may receive the RAR sent by the access network device (where the RAR may be a response to an attempt before a current attempt, and for example, the preamble is sent in the current 4th attempt, but the received RAR is a response to the 1st attempt). To avoid a waste of resources, when receiving the RAR, the terminal device may stop the current round of random access attempt. In other words, one or more preamble transmissions that are not subsequently completed in the current round may no longer be continued.

According to a second aspect, an embodiment of this application provides a coverage enhancement method, applied to an access network device. The method may include: sending an indication message to a terminal device, where the indication message indicates the terminal device to initiate a RACH that is based on preamble repeated transmission, the indication message includes one or more of the following: RACH resource configuration information, preamble repeated transmission enabling information, and information about a quantity of preamble repeated transmissions, and a RACH resource configured by using the RACH resource configuration information is located on an unlicensed spectrum.

In this embodiment of this application, the access network device may deliver a configuration, so that in a process of initiating one round of random access by using an unlicensed spectrum resource, the terminal device may perform multiple random access preamble preamble repeated transmissions. Before each attempt to perform transmission of the preamble, the terminal device may first perform LBT detection on a transmission channel, to be specific, may perform multiple LBT detections on the transmission channel in one round of random access procedure. Because a busy or idle mode of the transmission channel is random, and multiple preamble transmission opportunities correspond to the multiple LBT detections, it is more likely to sense that the transmission channel is idle and occupy the transmission channel to send the preamble. This increases a success rate of a current round of random access, reduces a random access delay, and ensures user experience. Specifically, when the terminal device needs to perform communication by using the unlicensed spectrum resource, the terminal device first determines the random access preamble preamble (for example, the first preamble) used for the current round of random access, the quantity N of repeated transmissions of the preamble, and the physical random access channel PRACH (for example, the first PRACH) required for transmission of the preamble. Then, before performing transmission of the preamble each time, the terminal device first performs LBT detection on the transmission channel on which the PRACH is located. When the LBT detection succeeds, the terminal device may perform transmission of the preamble once through the PRACH. This is different from the conventional technology in which a terminal device performs transmission of a preamble in a process of initiating one round of random access, and if an LBT detection failure occurs before preamble transmission, the terminal device directly reselects a resource used for a next round of random access. In this case, that the terminal device directly reselects a RACH resource and then initiates a next round of RACH attempt based on only one LBT detection failure increases a delay in the RACH process, and deteriorates user experience. In conclusion, in this embodiment of this application, in the process of initiating one round of random access by using the unlicensed spectrum resource, the terminal device performs multiple preamble repeated transmissions. If LBT detection for one preamble transmission attempt fails, the LBT detection continues to be performed for a next preamble transmission attempt. However, in the conventional technology, only one preamble transmission attempt is performed in one round of random access procedure, and a RACH resource is reselected if the LBT detection fails. In this embodiment of this application, the conventional-technology process in which a resource is directly reselected after one time of LBT detection is improved to a process in which multiple LBT detections are attempted to be performed for multiple preamble transmission opportunities. In other words, time for RACH resource reselection is spent on performing LBT detection. Because the busy or idle mode of the transmission channel is random, it is more likely to sense, through multiple detections, that the transmission channel is idle and occupy the transmission channel to send the preamble. In addition, preamble repeated transmission can effectively avoid a problem that the random access fails because the access network device cannot receive the preamble at a time. Therefore, this can increase the success rate of the current round of random access, reduce a random access delay, and ensure user experience.

In a possible implementation, the indication message further includes beam switching information, and the beam switching information indicates the terminal device to perform preamble repeated transmission through beam switching.

In this embodiment of this application, the access network device may indicate, by delivering the configuration, the terminal device to complete the multiple preamble repeated transmissions through beam switching, to further improve a random access success rate and reduce a delay.

According to a third aspect, an embodiment of this application provides a coverage enhancement processing apparatus, used in a terminal device, and may include: a determining unit, configured to determine a first RACH resource used for a current round of random access RACH, where the first RACH resource includes a first random access preamble preamble, a quantity N of repeated transmissions of the first preamble, and a first physical random access channel PRACH resource required for transmission of the first preamble each time, the first PRACH resource is located on a first transmission channel, the first transmission channel is located on an unlicensed spectrum, and N is an integer greater than 1; a detection unit, configured to: before each attempt to perform transmission of the first preamble, perform listen before talk LBT detection on the first transmission channel on which the first PRACH resource is located; and a sending unit, configured to: when the LBT detection succeeds once, perform transmission of the first preamble once by using the first PRACH resource.

In this embodiment of this application, in a process of initiating one round of random access by using an unlicensed spectrum resource, the terminal device may perform multiple random access preamble preamble repeated transmissions. Before each attempt to perform transmission of the preamble, the terminal device may first perform LBT detection on the transmission channel, to be specific, may perform multiple LBT detections on the transmission channel in one round of random access procedure. Because a busy or idle mode of the transmission channel is random, and multiple preamble transmission opportunities correspond to the multiple LBT detections, it is more likely to sense that the transmission channel is idle and occupy the transmission channel to send the preamble. This increases a success rate of a current round of random access, reduces a random access delay, and ensures user experience. Specifically, when the terminal device needs to perform communication by using the unlicensed spectrum resource, the terminal device first determines, by using the determining unit, the random access preamble preamble (for example, the first preamble) used for the current round of random access, the quantity N of repeated transmissions of the preamble, and a physical random access channel PRACH (for example, the first PRACH) required for transmission of the preamble. Then, before performing transmission of the preamble each time, the terminal device first performs, by using the detection unit, LBT detection on the transmission channel on which the PRACH is located. When the LBT detection succeeds, the terminal device may perform transmission of the preamble once through the PRACH by using the sending unit. This is different from the conventional technology in which the terminal device transmits the preamble only once in a process of initiating one round of random access, and if an LBT detection failure occurs before the preamble transmission, the terminal device directly reselects a resource used for a next round of random access. In this case, that the terminal device directly reselects a RACH resource and then initiates a next round of RACH attempt based on only one LBT detection failure increases a delay in the RACH process, and deteriorates user experience. In conclusion, in this embodiment of this application, in the process of initiating one round of random access by using the unlicensed spectrum resource, the terminal device performs the multiple preamble repeated transmissions. If LBT detection for one preamble transmission attempt fails, the LBT detection continues to be performed for a next preamble transmission attempt. However, in the conventional technology, only one preamble transmission attempt is performed in one round of random access procedure, and a RACH resource is reselected if the LBT detection fails. In this embodiment of this application, the conventional-technology process in which a resource is directly reselected after one time of LBT detection is improved to a process in which multiple LBT detections are performed for multiple preamble transmission opportunities. In other words, time for RACH resource reselection is spent on performing LBT detection. Because the busy or idle mode of the transmission channel is random, it is more likely to sense, through multiple detections, that the transmission channel is idle and occupy the transmission channel to send the preamble. In addition, preamble repeated transmission can effectively avoid a problem that the random access fails because the access network device cannot receive the preamble at a time. Therefore, this can increase the success rate of the current round of random access, reduce the random access delay, and ensure user experience.

In a possible implementation, the apparatus further includes: a first processing unit, configured to: when the LBT detection fails once, stop the attempt to perform transmission of the first preamble.

In a possible implementation, the apparatus further includes a second processing unit, configured to: when detection results for multiple LBT detections meet a preset condition, reselect a second RACH resource for a next round of RACH attempt.

In a possible implementation, the terminal device includes a medium access control MAC layer and a physical layer; and the detection unit is specifically configured to indicate, using the MAC layer, the physical layer to perform LBT detection on the first transmission channel on which the first PRACH resource is located.

In a possible implementation, the second processing unit is further specifically configured to: receive, using the MAC layer, the detection results for the multiple LBT detections fed back by the physical layer, and perform statistics collection; and reselect the second RACH resource using the MAC layer, and indicate the physical layer to perform the next round of RACH attempt.

In a possible implementation, the second processing unit is further specifically configured to: perform statistics collection on the detection results for the multiple LBT detections using the physical layer, and feed back a statistical result to the MAC layer; and reselect the second RACH resource using the MAC layer, and indicate the physical layer to perform the next round of RACH attempt.

In a possible implementation, the preset condition includes any one of the following conditions: a quantity of LBT detection failures in the statistical result reaches a first preset threshold, where the first preset threshold is N; a quantity of LBT detection failures in the statistical result reaches a second preset threshold, where the second preset threshold is M, and M is an integer greater than 0 and less than N; or a proportion of LBT detection failures in the statistical result reaches a preset proportion K, where the failure proportion K is a quotient of a quantity of LBT detection failures and a total quantity of LBT detections, and K is greater than 0 and less than or equal to 1.

In a possible implementation, the second processing unit is specifically configured to determine the second RACH resource used for the next round of random access RACH, where the second RACH resource includes a second random access preamble preamble, a quantity N+n of repeated transmissions of the second preamble, and a second physical random access channel PRACH resource required for transmission of the second preamble, and n is an integer greater than or equal to 0.

In a possible implementation, the apparatus further includes a receiving unit, configured to receive an indication message sent by an access network device, where the indication message indicates the terminal device to initiate contention-free random access CFRA that is based on preamble repeated transmission, the indication message includes one or more of the following: RACH resource configuration information, preamble repeated transmission enabling information, and information about a quantity of preamble repeated transmissions, and a RACH resource configured by using the RACH resource configuration information is located on an unlicensed spectrum.

In a possible implementation, the indication message further includes beam switching information, and the beam switching information indicates the terminal device to perform preamble repeated transmission through beam switching.

In a possible implementation, the apparatus further includes a third processing unit, configured to: when a random access response RAR message sent by the access network device is received, stop the current round of random access attempt.

According to a fourth aspect, an embodiment of this application provides a coverage enhancement processing apparatus, used in an access network device, and may include: a sending unit, configured to send an indication message to a terminal device, where the indication message indicates the terminal device to initiate a RACH that is based on preamble repeated transmission, the indication message includes one or more of the following: RACH resource configuration information, preamble repeated transmission enabling information, and information about a quantity of preamble repeated transmissions, and a RACH resource configured by using the RACH resource configuration information is located on an unlicensed spectrum.

In this embodiment of this application, the access network device may deliver a configuration to the terminal device by using the sending unit, so that in a process of initiating one round of random access by using an unlicensed spectrum resource, the terminal device may perform multiple random access preamble preamble repeated transmissions. Before each attempt to perform transmission of the preamble, the terminal device may first perform LBT detection on the transmission channel, to be specific, may perform multiple LBT detections on the transmission channel in one round of random access procedure. Because a busy or idle mode of the transmission channel is random, and multiple preamble transmission opportunities correspond to the multiple LBT detections, it is more likely to sense that the transmission channel is idle and occupy the transmission channel to send the preamble. This increases a success rate of a current round of random access, reduces a random access delay, and ensures user experience. Specifically, when the terminal device needs to perform communication by using the unlicensed spectrum resource, the terminal device first determines the random access preamble preamble (for example, the first preamble) used for the current round of random access, the quantity N of preamble repeated transmissions, and the physical random access channel PRACH (for example, the first PRACH) required for transmission of the preamble. Then, before performing transmission of the preamble each time, the terminal device first performs LBT detection on the transmission channel on which the PRACH is located. When the LBT detection succeeds, the terminal device may perform transmission of the preamble once through the PRACH. This is different from the conventional technology in which the terminal device transmits the preamble only once in a process of initiating one round of random access; and if an LBT detection failure occurs before the preamble transmission, the terminal device directly reselects a resource used for a next round of random access. In this case, that the terminal device directly reselects a RACH resource and then initiates a next round of RACH attempt based on only one LBT detection failure increases a delay in the RACH process, and deteriorates user experience. In conclusion, in this embodiment of this application, in the process of initiating one round of random access by using the unlicensed spectrum resource, the terminal device performs multiple preamble repeated transmissions. If LBT detection for one preamble transmission attempt fails, the LBT detection continues to be performed for a next preamble transmission attempt. However, in the conventional technology, only one preamble transmission attempt is performed in one round of random access procedure, and a RACH resource is reselected if the LBT detection fails. In this embodiment of this application, the conventional-technology process in which a resource is directly reselected after one time of LBT detection is improved to a process in which multiple LBT detections are performed for multiple preamble transmission opportunities. In other words, time for RACH resource reselection is spent on performing LBT detection. Because the busy or idle mode of the transmission channel is random, it is more likely to sense, through multiple detections, that the transmission channel is idle and occupy the transmission channel to send the preamble. In addition, preamble repeated transmission can effectively avoid a problem that the random access fails because the access network device cannot receive the preamble at a time. Therefore, this can increase the success rate of the current round of random access, reduce the random access delay, and ensure user experience.

In a possible implementation, the indication message further includes beam switching information, and the beam switching information indicates the terminal device to perform preamble repeated transmission through beam switching.

According to a fifth aspect, an embodiment of this application provides a communication apparatus. The communication apparatus includes a processor, and the processor is configured to support the communication apparatus in implementing a corresponding function in the coverage enhancement processing method provided in one or more of the first aspect and the second aspect. The communication apparatus may further include a memory. The memory is configured to be coupled to the processor, and the memory stores program instructions and data that are necessary for the communication apparatus. The communication apparatus may further include a communication interface, configured for communication between the communication apparatus and another device or communication network.

According to a sixth aspect, an embodiment of this application provides a communication system, including one or more terminal devices and one or more access network devices. The one or more terminal devices are communicatively connected to the one or more access network devices, the one or more terminal devices perform the method according to any one of the first aspect, and the one or more access network devices perform the method according to any one of the second aspect.

According to a seventh aspect, an embodiment of this application provides a computer-readable storage medium, configured to store computer software instructions used by a processor in a device apparatus for implementing the coverage enhancement processing method according to one or more of the third aspect, the fourth aspect, and the fifth aspect. The computer software instructions include a program designed for performing the foregoing aspects.

According to an eighth aspect, an embodiment of this application provides a computer program. The computer program includes instructions, and when the computer program is executed by a computer, the computer is enabled to perform a procedure performed by the processor in a communication apparatus in the fifth aspect.

According to a ninth aspect, an embodiment of this application provides a chip system. The chip system includes a processor, configured to support a device in implementing a function in one or more of the first aspect and the second aspect, for example, generating or processing information in the foregoing coverage enhancement processing method. In a possible design, the chip system further includes a memory, and the memory is configured to store program instructions and data that are necessary for the device. The chip system may include a chip, or may include a chip and another discrete component.

### BRIEF DESCRIPTION OF DRAWINGS

To describe the technical solutions in embodiments of this application or in the background more clearly, the following describes the accompanying drawings for describing embodiments of this application or the background.
FIG. 1a is a schematic flowchart of contention-based random access;
FIG. 1b is a schematic flowchart of contention-free random access;
FIG. 2 is a schematic flowchart of random access in the conventional technology;
FIG. 3 is a diagram of a communication system architecture according to an embodiment of this application;
FIG. 4 is a schematic flowchart of a coverage enhancement processing method according to an embodiment of this application;
FIG. 5a is a diagram of a resource relationship according to an embodiment of this application;
FIG. 5b is a schematic flowchart of detection result statistics collection according to an embodiment of this application;
FIG. 5c is another schematic flowchart of detection result statistics collection according to an embodiment of this application;
FIG. 6a is a diagram of random access processing according to an embodiment of this application;
FIG. 6b is another diagram of random access processing according to an embodiment of this application;
FIG. 7a is a diagram of a two-round random access relationship according to an embodiment of this application;
FIG. 7b is a diagram of another two-round random access relationship according to an embodiment of this application;
FIG. 7c is a diagram of a random access resource configuration according to an embodiment of this application;
FIG. 7d is a diagram of another random access resource configuration according to an embodiment of this application;
FIG. 8 is a diagram of a structure of a coverage enhancement processing apparatus according to an embodiment of this application;
FIG. 9 is a diagram of a structure of another coverage enhancement processing apparatus according to an embodiment of this application; and
FIG. 10 is a diagram of a structure of a communication apparatus 1000 according to an embodiment of this application.

### DESCRIPTION OF EMBODIMENTS

The following describes embodiments of this application with reference to the accompanying drawings in embodiments of this application.

In the specification, claims, and accompanying drawings of this application, the terms "first", "second", "third", "fourth", and the like are intended to distinguish between different objects but do not indicate a particular order. In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

"Embodiment" mentioned in this specification means that a particular feature, structure, or characteristic described with reference to the embodiments may be included in one or more embodiments of this application. The phrase shown in various locations in the specification may not necessarily refer to a same embodiment, and is not an independent or optional embodiment exclusive from another embodiment. It is explicitly and implicitly understood by persons skilled in the art that embodiments described in the specification may be combined with another embodiment.

Terminologies such as "component", "module", and "system" used in this specification indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or an execution thread, and a component may be located on one computer and/or distributed between two or more computers. In addition, these components may be executed from various computer-readable media that store various data structures. For example, the components may communicate by using a local and/or remote process based on, for example, a signal having one or more data packets (for example, data from two components interacting with another component in a local system, in a distributed system, and/or across a network, such as the Internet interacting with other systems by using signals).

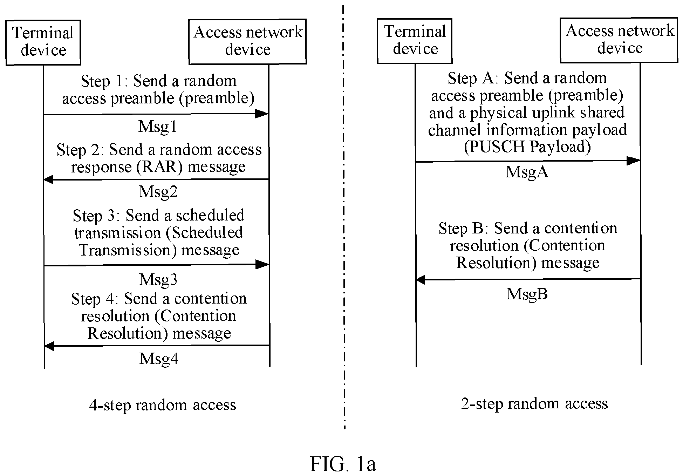

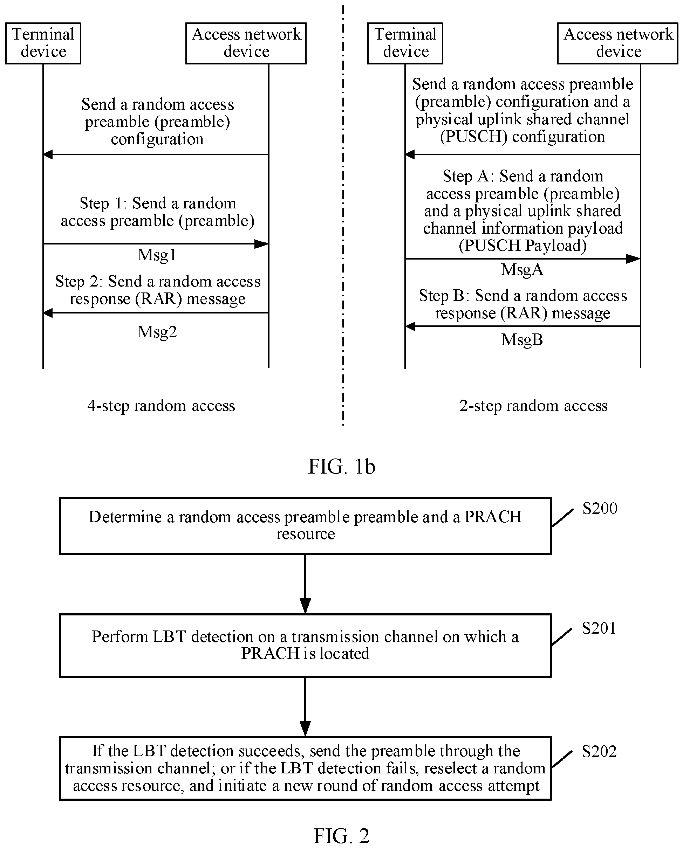

Some terms in this application are first described, to facilitate understanding of persons skilled in the art.
(1) Random access (Random Access, RA) may be classified into contention-based random access and contention-free random access. In an actual communication process, a random access procedure of a terminal device may be triggered by many events, which mainly include initial access, RRC connection re-establishment, uplink non-synchronization in an RRC connected mode, insufficient uplink scheduling resources in the RRC connected mode, an uplink scheduling failure, uplink synchronous reconfiguration (cell handover), and the like. For example, the main events include: (1) initial access of the terminal device in an RRC_IDLE idle mode; (2) RRC connection re-establishment; (3) downlink/uplink data arrival of the terminal device during an RRC connected mode but uplink non-synchronization of the terminal device; (4) uplink data arrival of the terminal device during an RRC connected mode but no corresponding physical uplink control channel (Physical Uplink Control Channel, PUCCH) resource for transmission of a scheduling request (Scheduling Request, SR) available; (5) SR failure; (6) RRC synchronous reconfiguration (for example, handover); (7) transition of the terminal device from an RRC_INACTIVE mode to an RRC connected mode; (8) establishment of time alignment for a secondary timing advance group (Secondary Timing Advance Group, sTAG); (9) request for on-demand system information; (10) beam failure recovery; and (11) consistent uplink LBT failure on an SpCell, namely, a primary cell (Primary Cell, PCell) or a primary secondary cell (Primary Secondary Cell, PSCell). In embodiments of this application, a process in which the terminal device initiates random access by using an unlicensed spectrum resource is improved, to increase a random access success rate and reduce a delay.
(2) Contention-based random access (Contention-Based Random Access, CBRA) may be classified into a 4-step random access procedure and a 2-step random access procedure. FIG. 1a is a schematic flowchart of contention-based random access in the conventional technology. In a CBRA procedure of 4-step random access, a terminal device sends a random access preamble preamble (that is, a Msg1) to an access network device, and monitors and receives an RAR message fed back by the access network device. Then, the terminal device sends a Msg3 to the access network device, and finally, receives a Msg4 from the access network device to complete contention resolution. In a CBRA procedure of 2-step random access, a terminal device sends a MsgA (including a random access preamble and associated PUSCH transmission) to an access network device, and then the terminal device receives a MsgB from the access network device and performs contention resolution. In embodiments of this application, steps of attempting transmission of a preamble (for example, step 1 in a 4-step random access manner and step A in a 2-step random access manner in FIG. 1a) in a process in which a terminal device initiates random access by using an unlicensed spectrum resource are improved, to increase a random access success rate and reduce a delay.
(3) Contention-free random access (Contention-Free Random Access, CFRA) may be classified into a 4-step random access procedure and a 2-step random access procedure. FIG. 1b is a schematic flowchart of contention-free random access in the conventional technology. In a CFRA procedure of 4-step random access, an access network device first allocates a random access preamble preamble, and then a terminal device initiates a RACH procedure by using the preamble allocated by the access network device. Finally, the terminal device receives an RAR message fed back by the access network device. In a CFRA procedure of 2-step random access, an access network device first allocates a random access preamble preamble and a physical uplink shared channel (Physical Uplink Shared Channel, PUSCH) resource to a terminal device, and then the terminal device sends a MsgA by using the resource allocated by the access network device, and receives an RAR from the access network device. As shown in FIG. 1b, in the CFRA procedure of 4-step random access, there is no exchange of four messages (for example, a Msg1 to a Msg4), that is, there is no interaction of four steps. However, the 1^{st} message sent by the terminal device to the access network device includes only the random access preamble. In other words, the 1^{st} message is the Msg1, instead of the MsgA. Therefore, the procedure may still be referred to as a 4-step random access procedure in the standard. In embodiments of this application, steps of transmission of a preamble (for example, step 1 in a 4-step random access manner and step A in a 2-step random access manner in FIG. 1b) in a process in which a terminal device initiates random access by using an unlicensed spectrum resource are improved, to increase a random access success rate and reduce a delay.
(4) An unlicensed spectrum is a frequency resource that can be used without a license. The unlicensed spectrum exists in multiple frequency bands. Currently, a typical unlicensed frequency is a working frequency of Wi-Fi (Wireless Fidelity). When a device in another communication system needs to use the unlicensed spectrum resource, the device usually needs to contend for a channel with a device in a Wi-Fi system before occupying the unlicensed spectrum resource. A common channel contention manner is LBT detection. In embodiments of this application, when a terminal device needs to initiate a random access procedure by using an unlicensed spectrum resource, the terminal device first determines, through LBT detection, whether a to-be-used resource is idle. When the LBT detection succeeds, the terminal device may initiate random access RACH to an access network device by using the unlicensed spectrum resource.
(5) Radio resource control (Radio Resource Control, RRC) is for allocating a radio resource and sending related signaling. RRC signaling carries all parameters required by protocol entities at a layer 2 and a physical layer for establishment, modification, and release, and also carries some signaling at a non-access stratum (NAS), for example, signaling used for mobility management or session management. In embodiments of this application, the RRC signaling may be used for transmission of indication information sent by an access network device to a terminal device.

First, a technical problem to be specifically resolved in this application is analyzed and proposed. In the conventional technology, for a method in which a terminal device initiates random access by using an unlicensed spectrum resource, refer to FIG. 2. FIG. 2 is a schematic flowchart of random access in the conventional technology. The method includes the following steps S200 to S202.

S200: Determine a random access preamble preamble and a PRACH resource.

S201: Perform LBT detection on a transmission channel on which the PRACH is located.

S202: If the LBT detection succeeds, send the preamble by using the PRACH resource; or if the LBT detection fails, reselect a random access resource, and initiate a new round of random access attempt.

The foregoing method has the following disadvantages.

When contention on an unlicensed spectrum is fierce, there is a low probability that an idle channel is detected through LBT, and a network can be successfully accessed only after multiple random access attempts. This causes a low success rate of each round of random access, and a large delay of an overall random access procedure. In the conventional technology, in the method in which the terminal device initiates random access by using the unlicensed spectrum resource, in a process of initiating one round of random access, transmission of the preamble is attempted only once. Before attempting to perform transmission of the preamble, the terminal device needs to first perform LBT detection on the transmission channel. When the LBT detection succeeds, the terminal device sends the preamble, and starts an RAR window to monitor an RAR message. It should be noted that an actual communication environment is usually complex, and in a scenario in which the terminal device is a weak terminal device or communication coverage is weak, even if the terminal device sends the preamble, the preamble may not be received by an access network device. Therefore, a random access success rate is low. When the LBT detection fails, the terminal device reselects the random access resource, and initiates the new round of random access attempt. This means that the terminal device reselects the RACH resource based on only one LBT detection failure. Because a busy or idle mode of the unlicensed spectrum resource is random, it is more likely to miss the idle mode of the resource when more time is spent on reselecting the RACH resource. This increases the delay of the RACH procedure and deteriorates user experience.

To resolve problems of the low success rate and the large delay in the process of initiating random access by using the unlicensed spectrum resource in the conventional technology, this application comprehensively considers the disadvantages in the conventional technology. The technical problem to be resolved includes the following aspect:
a preamble repeated transmission solution. In embodiments of this application, in a process of initiating one round of random access by using an unlicensed spectrum resource, a terminal device may perform multiple random access preamble preamble repeated transmissions (where this is different from the solution, in the conventional technology, in which transmission of the preamble is attempted only once). Before each attempt to perform transmission of a preamble, the terminal device may first perform LBT detection on a transmission channel, that is, may perform multiple LBT detections on the transmission channel in one round of random access procedure. Because a busy or idle mode of the transmission channel is random, and multiple preamble transmission opportunities correspond to the multiple LBT detections, it is more likely to sense that the transmission channel is idle and occupy the transmission channel to send the preamble. This increases a success rate of the current round of random access, reduces a random access delay, and ensures user experience.

In conclusion, the method in which the terminal device initiates random access by using the unlicensed spectrum resource cannot meet a higher requirement in an actual communication scenario. Therefore, a coverage enhancement processing method provided in this application is used to resolve the foregoing technical problem.

To better understand the coverage enhancement processing method provided in embodiments of this application, the following describes a system architecture and/or an application scenario of the coverage enhancement processing method provided in embodiments of this application. It may be understood that scenarios described in embodiments of this application are intended to describe the technical solutions in embodiments of this application more clearly, and do not constitute a limitation on the technical solutions provided in embodiments of this application.

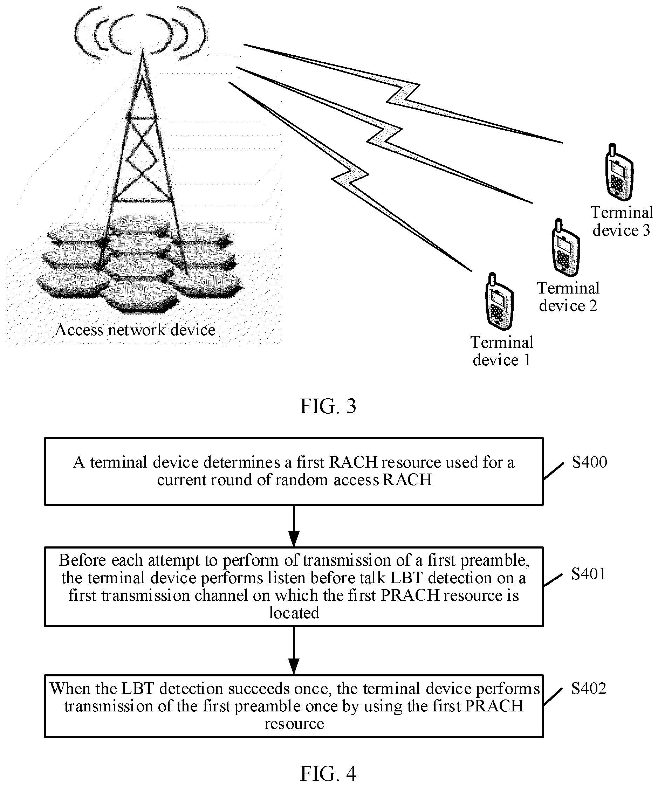

FIG. 3 is a diagram of a communication system architecture according to an embodiment of this application. The system architecture used in the coverage enhancement processing method provided in embodiments of this application may include one or more terminal devices and one or more access network devices. The access network device may transmit data or send control signaling to the one or more terminal devices. Data exchange between the access network device and the terminal device may be performed after random access is completed.

In embodiments of this application, the access network device may be an apparatus that is deployed in a radio access network and that provides a wireless communication function for the terminal device. The access network device may include a macro base station, a micro base station (also referred to as a small cell), a relay station, an access point, and the like in various forms. In systems using different radio access technologies, names of access network devices may be different, for example, a base transceiver station (Base Transceiver Station, BTS) in a global system for mobile communications (Global System for Mobile Communications, GSM) or code division multiple access (Code Division Multiple Access, CDMA) network, an NB (NodeB) in wideband code division multiple access (Wideband Code Division Multiple Access, WCDMA), and an eNB or eNodeB (Evolved NodeB) in long term evolution (Long Term Evolution, LTE). The access network device may alternatively be a radio controller in a cloud radio access network (Cloud Radio Access Network, CRAN) scenario. Alternatively, the access network device may be a base station device in a future 5G network or an access network device in a future evolved public land mobile network (Public Land Mobile Network, PLMN). Alternatively, the access network device may be a wearable device or a vehicle-mounted device. In embodiments of this application, the access network device may indicate, by delivering a configuration, the terminal device to initiate a random access procedure that is based on preamble repeated transmission. When receiving a preamble sent by the terminal device, the access network device may send a random access response RAR message to the terminal device for the preamble, to complete the random access procedure of the terminal device, so that the terminal device can exchange data with a network via the access network device.

In embodiments of this application, the terminal device may be various handheld devices, vehicle-mounted devices, wearable devices, computing devices, or other processing devices connected to a wireless modem that have a wireless communication function. For example, the terminal device may be a mobile station (Mobile Station, MS), a subscriber unit (Subscriber Unit), a cellular phone (Cellular Phone), a smartphone (Smartphone), a wireless data card, a personal digital assistant (Personal Digital Assistant, PDA) computer, a tablet computer, a wireless modem (Modem), a handheld device (Handset), a laptop computer (Laptop Computer), a machine type communication (Machine Type Communication, MTC) terminal, or the like. In embodiments of this application, the terminal device may initiate a random access request to the access network device in a manner of repeatedly transmitting the preamble by using an unlicensed spectrum. Subsequently, when the terminal device receives the random access response RAR message of the access network device for the preamble, the terminal device may complete random access according to a protocol, and may further exchange data with the network.

It should be noted that embodiments of this application may be applied to various communication systems, provided that an entity in the communication system needs to send information, and another entity needs to receive the information. It may be understood that the communication system architecture or scenario in the foregoing figure is merely an example implementation of embodiments of this application. The communication system architecture or scenario in embodiments of this application includes but is not limited to the foregoing communication system architecture or scenario.

Based on the diagram of the communication system architecture provided in FIG. 3, and with reference to a plurality of scenarios (which may include a scenario 1 to a scenario 4) related to the coverage enhancement processing method provided in this application, the following specifically analyzes and resolves the technical problem proposed in this application.

In some embodiments of the scenario 1, when initiating random access by using an unlicensed spectrum resource, a terminal device may perform multiple preamble repeated transmissions. FIG. 4 is a schematic flowchart of a coverage enhancement processing method according to an embodiment of this application. The method may be applied to the access network device and the terminal device in FIG. 3. In other words, the foregoing access network device and terminal device may be configured to support and perform step S400 to step S402 in a method procedure shown in FIG. 4. The method may include the following step S400 to step S402.

Step S400: The terminal device determines a first RACH resource used for a current round of random access RACH.

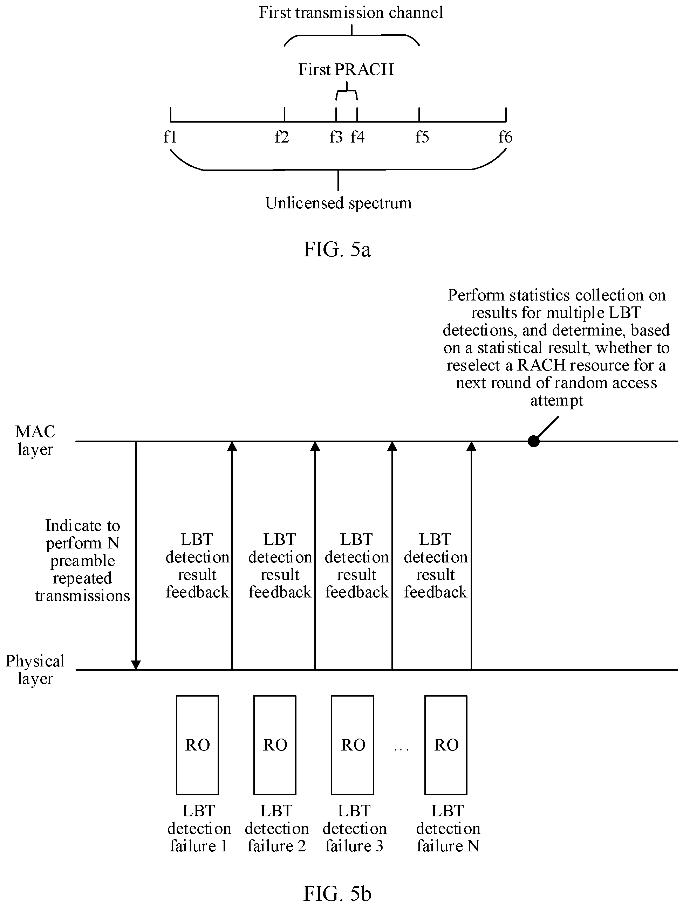

Specifically, the first RACH resource includes a first random access preamble preamble, a quantity N of repeated transmissions of the first preamble, and a first physical random access channel PRACH resource required for transmission of the first preamble each time. In a process of initiating one round of random access by using the unlicensed spectrum resource, the terminal device may perform the multiple preamble repeated transmissions. First, the terminal device determines a preamble (namely, the first random access preamble preamble) used for the current round of random access RACH, a quantity (namely, N, where N is an integer greater than 1) of times that the preamble can be repeatedly transmitted, and a physical random access channel (Physical Random Access Channel, PRACH) (namely, the first PRACH resource) required for transmission of the preamble each time. For a relationship between the first PRACH resource, a first transmission channel, and the unlicensed spectrum resource, refer to FIG. 5a. FIG. 5a is a diagram of a resource relationship according to an embodiment of this application. The first PRACH resource is located on the first transmission channel, and the first transmission channel is located on an unlicensed spectrum.

In a possible implementation, whether the terminal device performs random access that is based on preamble repeated transmission may be indicated by the access network device by delivering RRC configuration information, or may be indicated by an indication message sent by the access network device. A specific indication manner may be configured with reference to related descriptions of the following scenario 3. Alternatively, the following fields in the configuration information or the indication message may be configured, to indicate the terminal device to initiate random access that is based on preamble repeated transmission. For example, for a scenario in which multiple preambles preambles can be selected, the following settings may be made: (1) A frequency domain resource allocation field may be filled with an all-1 value. (2) When a random access preamble index field is configured to be not all 0s, the terminal device may repeatedly transmit a preamble indicated by the index value to initiate random access. (3) When a SUL carrier is configured for a corresponding cell, a UL/SUL field may indicate the terminal device to initiate RACH on the SUL carrier or a NUL carrier. (4) An SSB index indicates an SSB for determining a RACH occasion used for preamble transmission. (5) A PRACH mask index field specifies RACH occasions associated with SSBs indicated by SSB indexes, and these RACH occasions may be used for preamble transmission. In a scenario in which a single preamble preamble can be selected, subcarrier information may be used for indication. Refer to the following configurations: (1) A Starting Number of NPRACH repetitions field may indicate a quantity of times that the preamble needs to be repeatedly transmitted when the terminal device initiates RACH. (2) A Subcarrier indication of NPRACH field may indicate information about a transmission resource used for transmission of the preamble. (3) Other fields are set to all-1 values. It should be further noted that the random access is classified into contention-based random access and contention-free random access. The access network device may further include, in the indication message, a preamble specifically used when the terminal device initiates random access, to indicate the terminal device to initiate contention-free random access CFRA.

In a possible implementation, when initiating RACH, the terminal device may determine, based on information about measured cell channel quality, a type of random access to be initiated by the terminal device. For details, refer to related descriptions of the following scenario 4.

Step S401: Before each attempt to perform transmission of the first preamble, the terminal device performs listen before talk LBT detection on the first transmission channel on which the first PRACH resource is located.

Specifically, before initiating one round of random access by using the unlicensed spectrum resource, the terminal device needs to perform LBT detection, to determine whether a resource of a transmission channel to be used is idle. If the LBT detection succeeds, the terminal device may send a signal on the transmission channel; or if the LBT detection fails, the terminal device cannot send a signal through the transmission channel. Optionally, before performing transmission of the preamble, the terminal device may indicate, using a MAC layer, a physical layer to perform LBT detection on a resource of a transmission channel (for example, a resource of the first transmission channel) on which a PRACH resource (for example, the first PRACH resource) is located.

Step S402: When the LBT detection succeeds once, the terminal device performs transmission of the first preamble once by using the first PRACH resource.

Specifically, when the LBT detection succeeds once, the terminal device may perform preamble transmission once by using the resource of the transmission channel. Due to problems such as transmission channel quality or channel contention (where a sent preamble may not be received by the access network device), the terminal device usually does not receive an RAR immediately after sending the preamble once. To increase a random access success rate, the terminal device may perform LBT detection on the transmission channel again after successfully sending the preamble once, and attempt to continue to send the preamble. It may be understood that the terminal device may alternatively determine, based on a capability of the terminal device and an actual network quality status, whether to immediately attempt to send the preamble again after successfully sending the preamble. This is not specifically limited herein.

In a possible implementation, when the terminal device attempts to send the preamble once, the terminal device first performs LBT detection. When the LBT detection fails, the terminal device does not perform transmission of the first preamble on the corresponding first PRACH resource. Specifically, before performing transmission of the preamble each time, the terminal device may first perform LBT detection on the transmission channel. If the LBT detection fails, the terminal device may stop the current preamble transmission attempt. In other words, when the LBT detection fails (to be specific, the transmission channel is in a busy mode), the terminal device may quit the current preamble transmission attempt, to avoid increasing a channel conflict, and proceed with a next preamble transmission attempt in the current round of random access. It should be noted that, if the LBT detection is detection for a last preamble transmission in the current round of random access, when the LBT detection fails, the terminal device may stop the preamble transmission attempt in the current round, and determine, based on results for multiple LBT detections, whether to wait for an RAR message from the access network device or reselect a random access resource and initiate a new round of random access procedure.

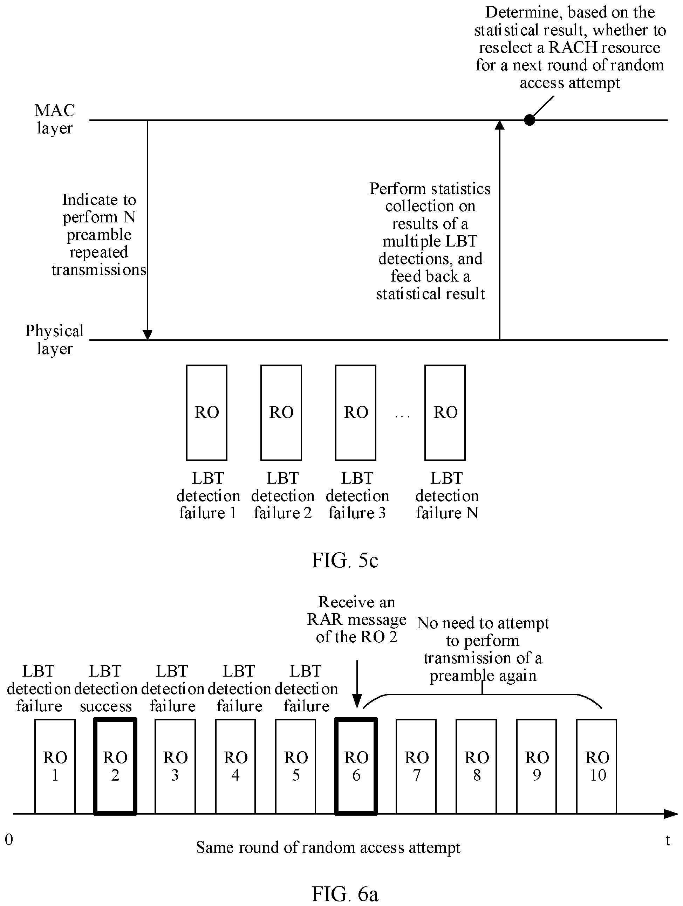

In a possible implementation, the terminal device may perform statistics collection on detection results for the multiple LBT detections, and when a statistical result meets a preset condition, the terminal device may reselect a second RACH resource for a next round of RACH attempt. Optionally, when the statistical result does not meet the preset condition, the terminal device may start an RAR receive window, to receive the RAR message sent by the access network device. Specifically, in the process of initiating one round of random access by using the unlicensed spectrum resource, the terminal device may attempt to perform multiple preamble repeated transmissions. LBT detection needs to be performed on the transmission channel before each transmission. The terminal device may perform statistics collection on a result for each LBT detection. When a statistical result meets a specific condition (for example, a quantity of LBT detection failures reaches a specific quantity or a specific proportion), it may be considered that transmission channel contention is excessively fierce or transmission channel quality is poor. A RACH resource is reselected in time to start a next round of random access attempt, to avoid increasing a delay in a random access procedure due to long-time invalid attempts. Optionally, the terminal device may perform statistics collection on the detection results for the LBT detections using the MAC layer. FIG. 5b is a schematic flowchart of detection result statistics collection according to an embodiment of this application. The physical layer may perform LBT detection before a random access occasion (RACH Occasion, RO), attempt to send a preamble, and then feed back detection results for multiple LBT detections to the MAC layer one by one, or the physical layer feeds back only a detection result for an LBT failure to the MAC layer. Then, the MAC layer performs statistics collection on the detection results for all the LBT detections, and finally, the MAC layer determines, based on a statistical result, whether to reselect a RACH resource to perform a next round of random access attempt. Specifically, the MAC layer may count, by using a variable, the LBT detection results fed back by the physical layer. For example, after the MAC layer indicates preamble transmission to the physical layer, a variable LBT_failure_times may be initialized to be equal to 0. After receiving a feedback, from the physical layer, indicating that LBT detection for one preamble transmission fails, the MAC layer increases the variable by 1. When finding that LBT_failure_times meets a preset condition, the MAC layer reselects the RACH resource to initiate the next round of RACH attempt. Optionally, the terminal device may perform statistics collection on the detection results for the LBT detections using the physical layer. FIG. 5c is another schematic flowchart of detection result statistics collection according to an embodiment of this application. The physical layer may perform LBT detection before a random access occasion RACH Occasion, attempt to send a preamble, perform statistics collection on detection results for multiple LBT detections, and then feed back a statistical result to the MAC layer. Finally, the MAC layer determines, based on the statistical result, whether to reselect a RACH resource to perform a next round of random access attempt. Specifically, the physical layer may perform statistics collection on an LBT failure by using a variable. For example, after the MAC layer indicates preamble transmission to the physical layer, the physical layer may initialize a variable LBT_failure_times to be equal to 0, and each time detecting that LBT for one preamble transmission fails, the physical layer increases the variable by 1. The physical layer may feed back the statistical result to the MAC layer after the statistics collection ends, or when finding that LBT_failure_times meets a preset condition, the physical layer feeds back the statistical result to the MAC layer. For example, the physical layer submits an LBT failure indication to the MAC layer. It may be understood that the terminal device may determine, based on the capability of the terminal device, to perform statistics collection on the LBT detection results using the physical layer or the MAC layer. This is not specifically limited herein.

In a possible implementation, after the terminal device completes one round of random access attempt for preamble repeated transmission, whether the RACH resource needs to be reselected to perform another random access attempt may be determined by the terminal device based on the statistical result for the LBT detection. When the statistical result meets the preset condition, the terminal device may consider that transmission channel contention is excessively fierce or transmission channel quality is poor (even if a few LBT detections succeed, a sent preamble may not be received by the access network device), so that the terminal device may reselect the resource to perform another random access attempt. The preset condition may be that a quantity of LBT detection failures in the statistical result reaches a first preset threshold, where the first preset threshold may be set to N (in other words, all LBT detections fail), and N is an integer greater than 1, for example, 10; or a quantity of LBT detection failures in the statistical result reaches a second preset threshold, where the second preset threshold may be set to M, and M is an integer greater than 0 and less than N, for example, 7; or a proportion of LBT detection failures in the statistical result reaches a preset proportion K, where the failure proportion K is a quotient of a quantity of LBT detection failures and a total quantity of LBT detections, and K is greater than 0 and less than or equal to 1, for example, 70%. It should be noted that N, M, and K may be set to other values, or may be set by the terminal device based on the capability of the terminal device and the actual network quality status. This is not specifically limited herein.

In a possible implementation, after a round of random access fails, the terminal device may reselect the RACH resource, to increase a quantity of preamble repeated transmissions, and perform a next round of random access attempt. For details, refer to related descriptions of the following scenario 2.

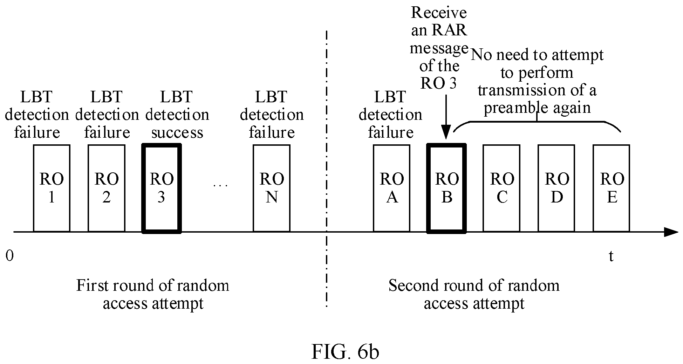

In a possible implementation, the terminal device may start the RAR receive window after using a PRACH resource corresponding to a first time of preamble transmission, to receive the random access response RAR message sent by the access network device. When the terminal device receives, in the RAR receive window, the RAR message fed back by the access network device, the terminal device may stop the current round of random access attempt. Optionally, after the LBT detection succeeds once, the terminal device may perform preamble transmission once through the transmission channel, and start the random access response (Random Access Response, RAR) window to monitor the RAR. Due to a transmission channel quality problem (where a sent preamble may not be received by the access network device) and a downlink delay problem, the terminal device usually does not receive the RAR immediately after sending the preamble once. To increase a success rate and efficiency of random access, the terminal device may perform LBT detection on the transmission channel again after sending the preamble once, and attempt to continue to send the preamble. In a subsequent attempt process, the terminal device may receive the RAR sent by the access network device. To avoid a waste of resources, when receiving the RAR, the terminal device may stop the current round of random access attempt. In other words, one or more subsequent preamble transmissions that are not completed in the current round may no longer be continued. It should be noted that, because the terminal device may perform multiple preamble repeated transmission attempts in one round of random access procedure, the terminal device may receive RAR messages for a same round. FIG. 6a is a diagram of random access processing according to an embodiment of this application. When the terminal device performs a preamble transmission attempt (for example, the 6th attempt) in one round of random access, the terminal device receives an RAR message from the access network device for a previous attempt (for example, the 2nd attempt) in the current round. In this case, the terminal device may stop the current round of preamble transmission attempt. The terminal device may alternatively receive RAR messages for different rounds. FIG. 6b is another diagram of random access processing according to an embodiment of this application. The terminal device performs N preamble transmission attempts in a first round of random access, but a quantity of LBT detection failures reaches M, and the terminal device may consider that transmission channel contention is excessively fierce or transmission channel quality is poor (even if a few LBT detections succeed, a sent preamble may not be received by the access network device). Therefore, a RACH resource is reselected to perform a second round of random access attempt. In this case, when receiving an RAR message from the access network device for a preamble in the first round, the terminal device may stop a preamble transmission attempt in the second round. It should be further noted that the terminal device may determine, based on the capability of the terminal device and the actual network quality status, whether to continue to monitor an RAR message in a previous round when the RACH resource is reselected to attempt to perform the next round of random access. This is not specifically limited herein.

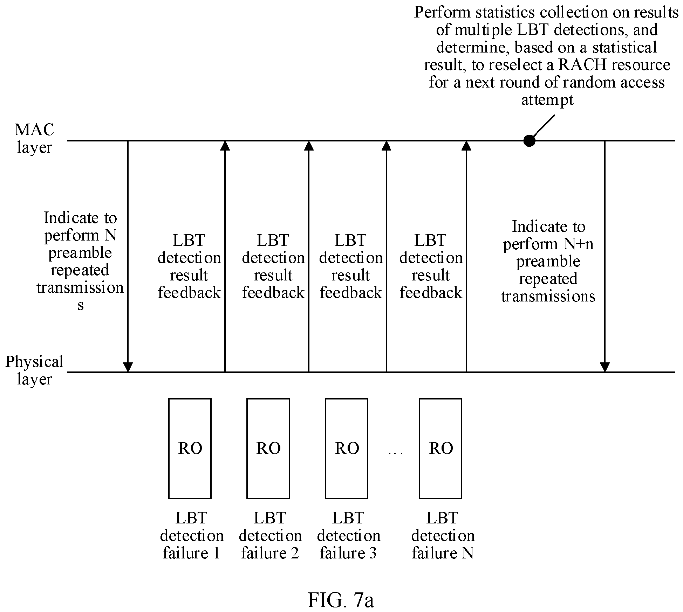

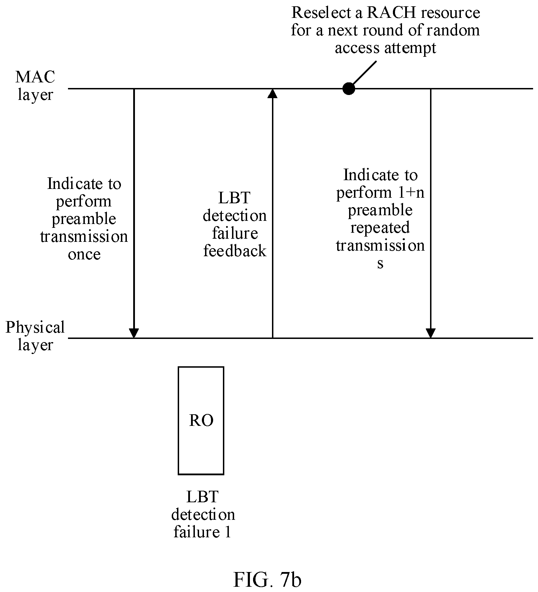

In some embodiments of the scenario 2, after one round or several consecutive rounds of random access fail, the terminal device may increase a quantity of preamble transmissions when reselecting a random access resource, and initiate a new round of random access procedure. FIG. 7a is a diagram of a two-round random access relationship according to an embodiment of this application. When reselecting a RACH resource, the terminal device may increase a quantity of preamble repeated transmissions in a current round of random access based on a quantity of preamble repeated transmissions in a previous round of random access, to increase a quantity of LBT detections on a transmission channel in the current round of random access procedure. This increases a success rate of the current round of random access, avoids increasing a random access delay, and ensures user experience. It should be noted that, in the foregoing round in which the random access fails, the terminal device may perform a single preamble transmission, or may perform multiple preamble repeated transmissions. In other words, a quantity of preamble repeated transmissions in a new round of random access may be increased based on a quantity of preamble repeated transmissions in a previous round, and whether preamble repeated transmission has been performed in the previous round is not limited. FIG. 7b is a diagram of another two-round random access relationship according to an embodiment of this application. In a previous round of random access procedure, the terminal device may attempt to perform transmission of a preamble only once. It may be understood that, when LBT detection for one round of preamble transmission fails, or when statistics collection on an LBT detection result in step S402 does not meet the preset condition, or when the terminal device determines to reselect a RACH resource to initiate a next round of RACH attempt after LBT detections for L consecutive rounds of preamble transmission fail, the terminal device may increase a quantity of preamble repeated transmissions in this round, for example, increase the quantity to N+n. L is an integer greater than 1, and n is an integer greater than or equal to 0. L and n may be values predefined in a protocol or preconfigured in a network, or may be determined by the terminal device based on the capability of the terminal device and the actual network quality status. This is not specifically limited herein.

In some embodiments of the scenario 3, the access network device may indicate the terminal device to perform random access that is based on preamble repeated transmission, for example, indicate the terminal device to perform CFRA that is based on preamble repeated transmission. Specifically, the indication message or an RRC reconfiguration message sent by the access network device to the terminal device may include one or more of the following: RACH resource configuration information, preamble repeated transmission enabling information, information about a quantity of preamble repeated transmissions, and beam switching information. The RACH resource configuration information may be represented by an index number (for example, denoted as a RACH-partitioning index) of a random access resource configuration. The terminal device may determine, based on the RACH resource configuration information, a quantity of times that the preamble needs to be repeatedly transmitted and a RACH resource corresponding to the preamble transmission. The preamble repeated transmission enabling information (which may be, for example, denoted as a preamble repetition indicator) indicates whether preamble repeated transmission needs to be performed when the terminal device initiates random access. When the indication message or the RRC reconfiguration message carries this field, the access network device may send, to the terminal device by using RRC signaling, RACH resource information preconfigured for the preamble repeated transmission, so that the terminal device can initiate random access by using this set of RACH resources. The information about the quantity of preamble repeated transmissions (which may be, for example, denoted as a preamble repetition number) indicates a specific quantity of preamble repeated transmissions that the terminal device needs to perform. Optionally, the terminal device may select a matching RACH resource configuration based on the quantity of preamble repeated transmissions, that is, select a RACH resource configuration that supports a same quantity of preamble repeated transmissions as the indicated quantity of preamble repeated transmissions, to initiate random access. The beam switching information indicates whether the terminal device can complete the multiple preamble repeated transmissions in a manner of switching an uplink beam direction. It should be noted that a manner in which the access network device indicates the terminal device to perform preamble repeated transmission may be applicable to an unlicensed spectrum, or may be applicable to a licensed spectrum.

Optionally, the foregoing indication information may be carried by using a physical downlink control channel (Physical Downlink Control Channel, PDCCH) signaling order, and the specific indication information may be set by using a related field in the PDCCH order.

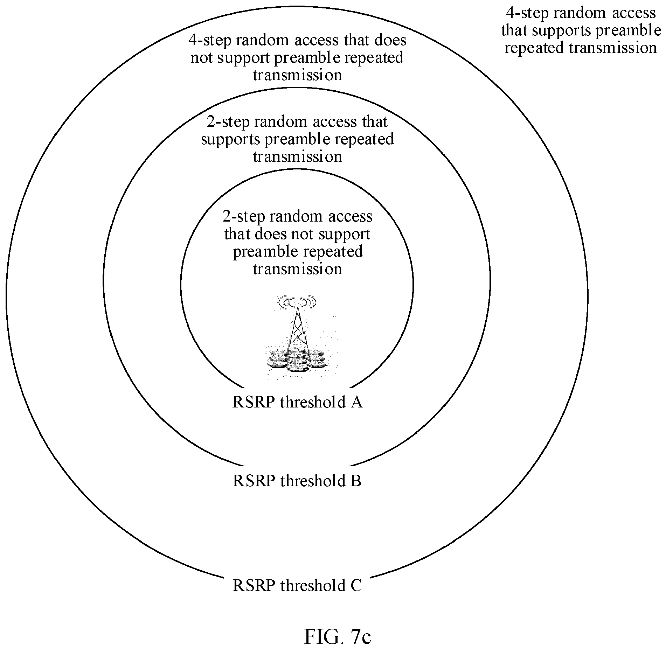

In some embodiments of the scenario 4, when the terminal device initiates random access, a specific type of the random access to be initiated by the terminal device may be determined based on information about measured cell channel quality. For example, the terminal device may determine, based on channel information such as a reference signal received power (Reference Signal Received Power, RSRP), a channel quality indicator (Channel Quality Indicator, CQI), and a signal to interference plus noise ratio (Signal to Interference plus Noise Ratio, SINR), whether to perform 4-step random access or 2-step random access, and whether the preamble repeated transmission needs to be performed. For ease of understanding, the RSRP channel information is used as an example. A protocol or the access network device may first perform the following RACH resource configurations for the terminal device, to indicate a specific type of random access to be performed by the terminal device: (1) a 2-step random access RACH resource configuration that supports preamble repeated transmission, where the configuration may include a RACH resource for performing N preamble transmissions and a PUSCH resource for performing N MsgA payload repeated transmissions, and the configuration corresponds to an RSRP threshold B; (2) a 2-step random access RACH resource configuration that does not support preamble repeated transmission and that corresponds to an RSRP threshold A; (3) a 4-step random access RACH resource configuration that supports preamble repeated transmission, where the configuration may include, for example, a RACH resource for performing N preamble transmissions, and the configuration corresponds to an RSRP threshold C; and (4) a 4-step random access RACH resource configuration that does not support preamble repeated transmission. The threshold A>the threshold B>the threshold C, and specific values may be determined based on an actual network status. FIG. 7c is a diagram of a random access resource configuration according to an embodiment of this application. When the terminal device needs to initiate random access RACH, the terminal device compares a measured cell RSRP result with an RSRP threshold corresponding to each RACH resource configuration described above, and determines a RACH resource configuration to be used for the current random access. When a cell RSRP value is greater than the RSRP threshold A, the terminal device may use the 2-step random access RACH resource configuration (that is, the configuration (2)) that does not support preamble repeated transmission. When a cell RSRP is less than the RSRP threshold A but is greater than the RSRP threshold B, the terminal device may select the 2-step random access RACH resource configuration (that is, the configuration (1)) that supports preamble repeated transmission. When a cell RSRP is less than the RSRP threshold B but is greater than the RSRP threshold C, the terminal device may select the 4-step random access RACH resource configuration (that is, the configuration (4)) that does not support preamble repeated transmission. Otherwise, the terminal device may select the 4-step random access RACH resource configuration (that is, the configuration (3)) that supports preamble repeated transmission. It should be noted that a specific setting of a resource configuration is related to channel quality. When the channel quality is good, 2-step random access may be used, and a single preamble transmission is performed, to simplify a random access procedure. When the channel quality is relatively good, 2-step random access may be used, and multiple preamble repeated transmissions are performed, to slightly simplify a procedure and increase a random access success rate. When the channel quality is relatively poor, 4-step random access may be used, and a single preamble transmission is performed. When the channel quality is poor, 4-step random access may be used, and multiple preamble repeated transmissions are performed, to increase a random access success rate. It should be further noted that a manner of determining the random access type based on channel quality information may be applicable to an unlicensed spectrum, or may be applicable to a licensed spectrum.

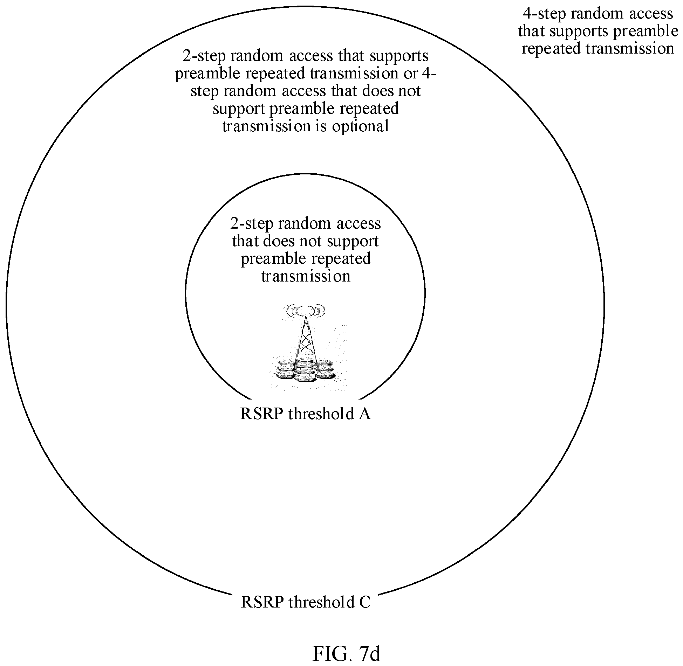

Optionally, when the protocol or the access network device configures the RACH resource configuration, any one or more of (1) to (4) may be included. In this case, when selecting a resource, the terminal device may refer only to a corresponding RSRP threshold. FIG. 7d is a diagram of another random access resource configuration according to an embodiment of this application. For example, when there is no RACH configuration corresponding to (2), the terminal device may select the RACH resource configuration based on only the RSRP threshold A and the RSRP threshold C.

It should be noted that, when the terminal device performs random access by using the 2-step random access RACH resource configuration that supports preamble repeated transmission, and the access still fails after a preset quantity of random access attempts, the terminal device may roll back to select another RACH resource configuration to continue to perform a RACH procedure. In this case, the terminal device may roll back with reference to one of the following manners: (a) If the protocol or the access network device configures a 4-step random access RACH resource configuration that has a same quantity of preamble repeated transmissions, the terminal device rolls back to use the RACH resource configuration to continue to perform a RACH procedure. Otherwise, the terminal device rolls back to use a conventional 4-step random access RACH resource configuration that does not support preamble repeated transmission, to continue to attempt a RACH procedure. (b) The protocol or the access network device specifies the terminal device to roll back to use a specific RACH resource configuration to continue to perform a RACH procedure.

Based on the foregoing method, in the process of initiating one round of random access by using the unlicensed spectrum resource, the terminal device may perform multiple random access preamble preamble repeated transmissions. Before each attempt to perform transmission of the preamble, the terminal device may first perform LBT detection on a transmission channel, to be specific, may perform multiple LBT detections on the transmission channel in one round of random access procedure. Because a busy or idle mode of the transmission channel is random, and multiple preamble transmission opportunities correspond to the multiple LBT detections, it is more likely to sense that the transmission channel is idle and occupy the transmission channel to send the preamble. In addition, preamble repeated transmission can effectively avoid a problem that the random access fails because the access network device cannot receive the preamble at a time. This increases a success rate of the current round of random access, reduces a random access delay, and ensures user experience.

For the foregoing technical problem to be actually resolved in this application, this embodiment of this application provides a method for increasing a random access success rate and reducing a random access delay, to resolve problems of a low success rate and a large delay in the conventional technology in which a terminal device performs random access by using an unlicensed spectrum resource. Specifically, when the terminal device needs to perform communication by using the unlicensed spectrum resource, the terminal device first determines a random access preamble preamble (for example, the first preamble) used for the current round of random access, a quantity N of repeated transmissions of the preamble, and a physical random access channel PRACH (for example, the first PRACH) required for transmission of the preamble. Then, before performing transmission of the preamble each time, the terminal device first performs LBT detection on a transmission channel on which the PRACH is located. When the LBT detection succeeds, the terminal device may perform transmission of the preamble once through the PRACH. This is different from the conventional technology in which the terminal device performs transmission of a preamble in a process of initiating one round of random access; and if an LBT detection failure occurs before the preamble transmission, the terminal device directly reselects a resource for a next round of random access. In this case, that the terminal device directly reselects a RACH resource and then initiates a next round of RACH attempt based only on one LBT detection failure increases a delay in a RACH process, and deteriorates user experience. In conclusion, in this embodiment of this application, in the process of initiating one round of random access by using the unlicensed spectrum resource, the terminal device performs multiple preamble repeated transmissions. If LBT detection for one preamble transmission attempt fails, the LBT detection continues to be performed for a next preamble transmission attempt. However, in the conventional technology, only one preamble transmission attempt is performed in one round of random access procedure, and a RACH resource is reselected if the LBT detection fails. In this application, the conventional-technology process in which a resource is directly reselected after one LBT detection is improved to a process in which multiple LBT detections are performed for multiple preamble transmission opportunities. In other words, time for RACH resource reselection is spent on performing LBT detection. Because the busy or idle mode of the transmission channel is random, it is more likely to sense, through multiple detections, that the transmission channel is idle and occupy the transmission channel to send the preamble. In addition, preamble repeated transmission can effectively avoid a problem that the random access fails because the access network device cannot receive the preamble at a time. Therefore, this can increase the success rate of the current round of random access, reduce the random access delay, and ensure user experience.

Therefore, when the coverage enhancement processing method provided in this application is applied to communication in a communication system, the problems of a low random access success rate and a large delay because LBT detection is performed only once (that is, a preamble is attempted to be sent only once) in a single round of random access procedure in the conventional solution of performing random access by using the unlicensed spectrum resource can be resolved.

In conclusion, in this application, a disadvantage in the conventional technology is overcome. The terminal device performs random access that is based on the multiple preamble repeated transmissions, the multiple preamble transmission opportunities correspond to the multiple LBT detections, and it is more likely to sense that the transmission channel is idle and occupy the transmission channel to send the preamble. In addition, preamble repeated transmission can effectively avoid a problem that the random access fails because the access network device cannot receive the preamble at a time. Therefore, this can increase the success rate of the current round of random access, reduce the random access delay, and ensure user experience.

The foregoing describes in detail the method in embodiments of this application. The following provides two related apparatuses in embodiments of this application.

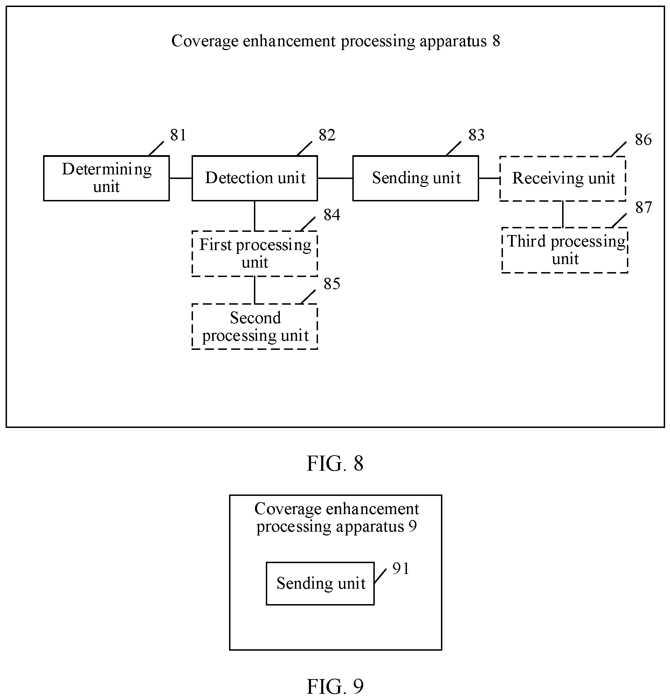

FIG. 8 is a diagram of a structure of a coverage enhancement processing apparatus according to an embodiment of this application. The coverage enhancement processing apparatus 8 is used in a terminal device, may include a determining unit 81, a detection unit 82, and a sending unit 83, and may further include a first processing unit 84, a second processing unit 85, a receiving unit 86, and a third processing unit 87. Detailed descriptions of the units are as follows.

The determining unit 81 is configured to determine a first RACH resource used for a current round of random access RACH, where the first RACH resource includes a first random access preamble preamble, a quantity N of repeated transmissions of the first preamble, and a first physical random access channel PRACH resource required for transmission of the first preamble each time, the first PRACH resource is located on a first transmission channel, the first transmission channel is located on an unlicensed spectrum, and N is an integer greater than 1.

The detection unit 82 is configured to: before each attempt to perform transmission of the first preamble, perform listen before talk LBT detection on the first transmission channel on which the first PRACH resource is located.

The sending unit 83 is configured to: when the LBT detection succeeds once, perform transmission of the first preamble once by using the first PRACH resource.

In a possible implementation, the apparatus further includes the first processing unit 84, configured to: when the LBT detection fails once, stop the attempt to perform transmission of the first preamble.

In a possible implementation, the apparatus further includes the second processing unit 85, configured to: when detection results for multiple LBT detections meet a preset condition, reselect a second RACH resource for a next round of RACH attempt.

In a possible implementation, the terminal device includes a medium access control MAC layer and a physical layer; and the detection unit 82 is specifically configured to indicate, using the MAC layer, the physical layer to perform LBT detection on the first transmission channel on which the first PRACH resource is located.

In a possible implementation, the second processing unit 85 is further specifically configured to: receive, using the MAC layer, the detection results for the multiple LBT detections fed back by the physical layer, and perform statistics collection; and reselect the second RACH resource using the MAC layer, and indicate the physical layer to perform the next round of RACH attempt.

In a possible implementation, the second processing unit 85 is further specifically configured to: perform statistics collection on the detection results for the multiple LBT detections using the physical layer, and feed back a statistical result to the MAC layer; and reselect the second RACH resource using the MAC layer, and indicate the physical layer to perform the next round of RACH attempt.

In a possible implementation, the preset condition includes any one of the following conditions: a quantity of LBT detection failures in the statistical result reaches a first preset threshold, where the first preset threshold is N; a quantity of LBT detection failures in the statistical result reaches a second preset threshold, where the second preset threshold is M, and M is an integer greater than 0 and less than N; or a proportion of LBT detection failures in the statistical result reaches a preset proportion K, where the failure proportion K is a quotient of a quantity of LBT detection failures and a total quantity of LBT detections, and K is greater than 0 and less than or equal to 1.

In a possible implementation, the second processing unit 85 is specifically configured to determine the second RACH resource used for the next round of random access RACH, where the second RACH resource includes a second random access preamble preamble, a quantity N+n of repeated transmissions of the second preamble, and a second physical random access channel PRACH resource required for transmission of the second preamble, and n is an integer greater than or equal to 0.

In a possible implementation, the apparatus further includes the receiving unit 86, configured to receive an indication message sent by an access network device, where the indication message indicates the terminal device to initiate contention-free random access CFRA that is based on preamble repeated transmission, the indication message includes one or more of the following: RACH resource configuration information, preamble repeated transmission enabling information, and information about a quantity of preamble repeated transmissions, and a RACH resource configured by using the RACH resource configuration information is located on an unlicensed spectrum.

In a possible implementation, the indication message further includes beam switching information, and the beam switching information indicates the terminal device to perform preamble repeated transmission through beam switching.

In a possible implementation, the apparatus further includes the third processing unit 87, configured to: when a random access response RAR message sent by the access network device is received, stop the current round of random access attempt.

FIG. 9 is a diagram of a structure of another coverage enhancement processing apparatus according to an embodiment of this application. The coverage enhancement processing apparatus 9 is used in an access network device, and may include a sending unit 91. Detailed descriptions of the unit are as follows.

The sending unit 91 is configured to send an indication message to a terminal device, where the indication message indicates the terminal device to initiate a RACH that is based on preamble repeated transmission, the indication message includes one or more of the following: RACH resource configuration information, preamble repeated transmission enabling information, and information about a quantity of preamble repeated transmissions, and a RACH resource configured by using the RACH resource configuration information is located on an unlicensed spectrum.

In a possible implementation, the indication message further includes beam switching information, and the beam switching information indicates the terminal device to perform preamble repeated transmission through beam switching.

It should be noted that, for functions of the functional units in the coverage enhancement processing apparatus 8 and the coverage enhancement processing apparatus 9 described in embodiments of this application, refer to related descriptions in the foregoing method embodiments. Details are not described herein again.

In a possible product form, the access network device and the terminal device in embodiments of this application may be implemented by using a general bus architecture.

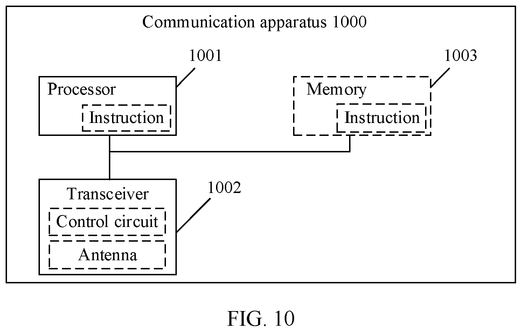

For ease of description, FIG. 10 is a diagram of a structure of a communication apparatus 1000 according to an embodiment of this application. The communication apparatus 1000 may be an access network device, a terminal device, or a chip in the access network device or the terminal device. FIG. 10 shows merely main components of the communication apparatus 1000. In addition to a processor 1001 and a transceiver 1002, the communication apparatus may further include a memory 1003 and an input/output apparatus (not shown in FIG. 10).

The processor 1001 is mainly configured to: process a communication protocol and communication data, control the entire communication apparatus, execute a software program, and process data of the software program. The memory 1003 is mainly configured to store the software program and data. The transceiver 1002 may include a control circuit and an antenna. The control circuit is mainly configured to perform conversion between a baseband signal and a radio frequency signal and process the radio frequency signal. The antenna is mainly configured to receive and send radio frequency signals in a form of electromagnetic waves. The input/output apparatus, such as a touchscreen, a display, or a keyboard, is mainly configured to: receive data input by a user and output data to the user.

After the communication apparatus is powered on, the processor 1001 may read the software program in the memory 1003, interpret and execute instructions of the software program, and process the data of the software program. When data needs to be sent in a wireless manner, the processor 1001 performs baseband processing on the to-be-sent data, and then outputs a baseband signal to the radio frequency circuit. The radio frequency circuit performs radio frequency processing on the baseband signal, and then sends a radio frequency signal to the outside through the antenna in a form of an electromagnetic wave. When data is sent to the communication apparatus, the radio frequency circuit receives a radio frequency signal through the antenna, converts the radio frequency signal into a baseband signal, and outputs the baseband signal to the processor 1001. The processor 1001 converts the baseband signal into data, and processes the data.

In another implementation, the radio frequency circuit and the antenna may be disposed independent of the processor that performs baseband processing. For example, in a distributed scenario, the radio frequency circuit and the antenna may be remotely disposed independent of the communication apparatus.

The processor 1001, the transceiver 1002, and the memory 1003 may be connected through a communication bus.

In a design, the communication apparatus 1000 may be configured to perform a function of the coverage enhancement processing method in the foregoing method embodiments. The processor 1001 may be configured to generate various messages sent in the steps in FIG. 4, and/or configured to perform another process of the technology described in this specification. The transceiver 1002 may be configured to receive and send messages in the steps in FIG. 4, and/or configured to perform another process of the technology described in this specification.

In any one of the foregoing designs, the processor 1001 may include a transceiver configured to implement receiving and sending functions. For example, the transceiver may be a transceiver circuit, an interface, or an interface circuit. The transceiver circuit, the interface, or the interface circuit configured to implement the receiving and sending functions may be separated, or may be integrated. The transceiver circuit, the interface, or the interface circuit may be configured to read and write code/data. Alternatively, the transceiver circuit, the interface, or the interface circuit may be configured to transmit or transfer a signal.

In any one of the foregoing designs, the processor 1001 may store instructions. The instructions may be a computer program. The computer program is run on the processor 1001, so that the communication apparatus 1000 is enabled to perform the method described in any one of the foregoing method embodiments. The computer program may be fixed in the processor 1001. In this case, the processor 1001 may be implemented by hardware.

In an implementation, the communication apparatus 1000 may include a circuit. The circuit may implement the sending, receiving, or communication function in the foregoing method embodiments. The processor and the transceiver that are described in this application may be implemented on an integrated circuit (integrated circuit, IC), an analog IC, a radio frequency integrated circuit RFIC, a hybrid signal IC, an application-specific integrated circuit (application-specific integrated circuit, ASIC), a printed circuit board (printed circuit board, PCB), an electronic device, or the like. The processor and the transceiver may alternatively be manufactured by using various IC technologies, for example, a complementary metal oxide semiconductor (complementary metal oxide semiconductor, CMOS), an N-channel metal oxide semiconductor (nMetal-oxide-semiconductor, NMOS), a P-channel metal oxide semiconductor (positive channel metal oxide semiconductor, PMOS), a bipolar junction transistor (bipolar junction transistor, BJT), a bipolar CMOS (BiCMOS), silicon germanium (SiGe), and gallium arsenide (GaAs).

A scope of the communication apparatus described in this application is not limited thereto, and a structure of the communication apparatus may not be limited by FIG. 10. The communication apparatus may be an independent device or may be a part of a large device. For example, the communication apparatus may be:
(1) an independent integrated circuit IC, a chip, or a chip system or subsystem;
(2) a set including one or more ICs, where optionally, the set of ICs may also include a storage component configured to store data and a computer program;
(3) an ASIC, for example, a modem (Modem);
(4) a module that can be embedded in another device;
(5) a receiver, a terminal, an intelligent terminal, a cellular phone, a wireless device, a handheld device, a mobile unit, a vehicle-mounted device, a network device, a cloud device, an artificial intelligence device, or the like; or
(6) another device or the like.

In a possible product form, the network device or the terminal device in embodiments of this application may be implemented by a general-purpose processor.

The general-purpose processor for implementing functions of the coverage enhancement processing method includes a processing circuit and an input/output interface that is internally connected to and communicates with the processing circuit.

In a design, the general-purpose processor may be configured to perform functions of the coverage enhancement processing method in the foregoing method embodiments. The processing circuit may be configured to generate various messages sent in the steps in FIG. 4, and/or configured to perform another process of the technology described in this specification. The input/output interface may be configured to receive and send messages in the steps in FIG. 4, and/or configured to perform another process of the technology described in this specification.

It should be understood that the communication apparatuses in the foregoing product forms have any function of the coverage enhancement processing method in the foregoing method embodiments, and details are not described herein again.

An embodiment of this application further provides a computer-readable storage medium. The computer-readable storage medium stores computer program code. When a processor executes the computer program code, an electronic device performs the method in any one of the foregoing embodiments.

An embodiment of this application further provides a communication apparatus. The apparatus may exist in a product form of a chip. A structure of the apparatus includes a processor and an interface circuit. The processor is configured to communicate with another apparatus using a receive circuit, so that the apparatus performs the method in any one of the foregoing embodiments.

An embodiment of this application further provides a wireless communication system, which includes one or more of a network device and a terminal device, and may perform the method in any one of the foregoing embodiments.

An embodiment of this application further provides a computer program product. When the computer program product runs on a computer, the computer is enabled to perform the method in any one of the foregoing embodiments.

In the foregoing embodiments, descriptions of the embodiments have respective focuses. For a part that is not described in detail in an embodiment, refer to related descriptions in other embodiments.

It should be noted that, for brief description, the foregoing method embodiments are expressed as a series of actions. However, persons skilled in the art should appreciate that this application is not limited to the described order of the actions, because according to this application, some steps may be performed in other orders or simultaneously. It should be further appreciated by persons skilled in the art that embodiments described in this specification all belong to example embodiments, and the involved actions and modules are not necessarily needed by this application.

In the several embodiments provided in this application, it should be understood that the disclosed apparatus may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic or other forms.

The foregoing units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments in this application.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the foregoing integrated unit is implemented in the form of a software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for instructing a computer device (which may be a personal computer, a server, or a network device, and may specifically be a processor in the computer device) to perform all or some of the steps of the methods described in embodiments of this application. The foregoing storage medium may include: any medium that can store program code, such as a USB flash drive, a removable hard disk, a magnetic disk, an optical disc, a read-only memory (Read-Only Memory, ROM for short), or a random access memory (Random Access Memory, RAM for short).

The foregoing embodiments are merely intended for describing the technical solutions of this application rather than limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of embodiments of this application.

## Claims

1. A coverage enhancement processing method, applied to a terminal device, wherein the method comprises:
determining a first RACH resource for a current round of random access RACH, wherein the first RACH resource comprises a first random access preamble preamble, a quantity N of repeated transmissions of the first preamble, and a first physical random access channel PRACH resource required for transmission of the first preamble each time, the first PRACH resource is located on a first transmission channel, the first transmission channel is located on an unlicensed spectrum, and N is an integer greater than 1;
before each attempt to perform transmission of the first preamble, performing listen before talk LBT detection on the first transmission channel on which the first PRACH resource is located; and
when the LBT detection succeeds once, performing transmission of the first preamble once by using the first PRACH resource.

2. The method according to claim 1, wherein the method further comprises:
when the LBT detection fails once, stopping the attempt to perform transmission of the first preamble.

3. The method according to claim 1 or 2, wherein the method further comprises:
when detection results for multiple LBT detections meet a preset condition, reselecting a second RACH resource for a next round of RACH attempt.

4. The method according to any one of claims 1 to 3, wherein the terminal device comprises a medium access control MAC layer and a physical layer; and
the performing listen before talk LBT detection on the first transmission channel on which the first PRACH resource is located comprises:
indicating, using the MAC layer, the physical layer to perform LBT detection on the first transmission channel on which the first PRACH resource is located.

5. The method according to claim 4, wherein the method further comprises:
receiving, using the MAC layer, the detection results for the multiple LBT detections fed back by the physical layer, and performing statistics collection; and
the reselecting a second RACH resource for a next round of RACH attempt comprises:
reselecting the second RACH resource using the MAC layer, and indicating the physical layer to perform the next round of RACH attempt.

6. The method according to claim 4, wherein the method further comprises:
performing statistics collection on the detection results for the multiple LBT detections using the physical layer, and feeding back a statistical result to the MAC layer; and
the reselecting a second RACH resource for a next round of RACH attempt comprises:
reselecting the second RACH resource using the MAC layer, and indicating the physical layer to perform the next round of RACH attempt.

7. The method according to any one of claims 3 to 6, wherein the preset condition comprises any one of the following conditions:
a quantity of LBT detection failures in the statistical result reaches a first preset threshold, wherein the first preset threshold is N;
a quantity of LBT detection failures in the statistical result reaches a second preset threshold, wherein the second preset threshold is M, and M is an integer greater than 0 and less than N; or
a proportion of LBT detection failures in the statistical result reaches a preset proportion K, wherein the failure proportion K is a quotient of a quantity of LBT detection failures and a total quantity of LBT detections, and K is greater than 0 and less than or equal to 1.

8. The method according to any one of claims 3 to 7, wherein the reselecting a second RACH resource comprises:
determining the second RACH resource used for the next round of random access RACH, wherein the second RACH resource comprises a second random access preamble preamble, a quantity N+n of repeated transmissions of the second preamble, and a second physical random access channel PRACH resource required for transmission of the second preamble, and n is an integer greater than or equal to 0.

9. The method according to any one of claims 1 to 8, wherein the method further comprises:
receiving an indication message sent by an access network device, wherein the indication message indicates the terminal device to initiate contention-free random access CFRA that is based on preamble repeated transmission, the indication message comprises one or more of the following: RACH resource configuration information, preamble repeated transmission enabling information, and information about a quantity of preamble repeated transmissions, and a RACH resource configured by using the RACH resource configuration information is located on an unlicensed spectrum.

10. The method according to claim 9, wherein the indication message further comprises beam switching information, and the beam switching information indicates the terminal device to perform preamble repeated transmission through beam switching.

11. The method according to any one of claims 1 to 10, wherein the method further comprises:
when a random access response RAR message sent by the access network device is received, stopping the current round of random access attempt.

12. A coverage enhancement processing method, applied to an access network device, wherein the method comprises:
sending an indication message to a terminal device, wherein the indication message indicates the terminal device to initiate a RACH that is based on preamble repeated transmission, the indication message comprises one or more of the following: RACH resource configuration information, preamble repeated transmission enabling information, and information about a quantity of preamble repeated transmissions, and a RACH resource configured by using the RACH resource configuration information is located on an unlicensed spectrum.

13. The method according to claim 11, wherein the indication message further comprises beam switching information, and the beam switching information indicates the terminal device to perform preamble repeated transmission through beam switching.

14. A coverage enhancement processing apparatus, used in a terminal device, wherein the apparatus comprises:
a determining unit, configured to determine a first RACH resource used for a current round of random access RACH, wherein the first RACH resource comprises a first random access preamble preamble, a quantity N of repeated transmissions of the first preamble, and a first physical random access channel PRACH resource required for transmission of the first preamble each time, the first PRACH resource is located on a first transmission channel, the first transmission channel is located on an unlicensed spectrum, and N is an integer greater than 1;
a detection unit, configured to: before each attempt to perform transmission of the first preamble, perform listen before talk LBT detection on the first transmission channel on which the first PRACH resource is located; and
a sending unit, configured to: when the LBT detection succeeds once, perform transmission of the first preamble once by using the first PRACH resource.

15. The apparatus according to claim 14, wherein the apparatus further comprises:
a first processing unit, configured to: when the LBT detection fails once, stop the attempt to perform transmission of the first preamble.

16. The apparatus according to claim 14 or 15, wherein the apparatus further comprises:
a second processing unit, configured to: when detection results for multiple LBT detections meet a preset condition, reselect a second RACH resource for a next round of RACH attempt.

17. The apparatus according to any one of claims 14 to 16, wherein the terminal device comprises a medium access control MAC layer and a physical layer; and
the detection unit is specifically configured to:
indicate, using the MAC layer, the physical layer to perform LBT detection on the first transmission channel on which the first PRACH resource is located.

18. The apparatus according to claim 17, wherein the second processing unit is further specifically configured to:
receive, using the MAC layer, the detection results for the multiple LBT detections fed back by the physical layer, and perform statistics collection; and
reselect the second RACH resource using the MAC layer, and indicate the physical layer to perform the next round of RACH attempt.

19. The apparatus according to claim 17, wherein the second processing unit is further specifically configured to:
perform statistics collection on the detection results for the multiple LBT detections using the physical layer, and feed back a statistical result to the MAC layer; and
reselect the second RACH resource using the MAC layer, and indicate the physical layer to perform the next round of RACH attempt.

20. The apparatus according to any one of claims 16 to 19, wherein the preset condition comprises any one of the following conditions:
a quantity of LBT detection failures in the statistical result reaches a first preset threshold, wherein the first preset threshold is N;
a quantity of LBT detection failures in the statistical result reaches a second preset threshold, wherein the second preset threshold is M, and M is an integer greater than 0 and less than N; or
a proportion of LBT detection failures in the statistical result reaches a preset proportion K, wherein the failure proportion K is a quotient of a quantity of LBT detection failures and a total quantity of LBT detections, and K is greater than 0 and less than or equal to 1.

21. The apparatus according to any one of claims 16 to 20, wherein the second processing unit is specifically configured to:
determine the second RACH resource used for the next round of random access RACH, wherein the second RACH resource comprises a second random access preamble preamble, a quantity N+n of repeated transmissions of the second preamble, and a second physical random access channel PRACH resource required for transmission of the second preamble, and n is an integer greater than or equal to 0.

22. The apparatus according to any one of claims 14 to 21, wherein the apparatus further comprises:
a receiving unit, configured to receive an indication message sent by an access network device, wherein the indication message indicates the terminal device to initiate contention-free random access CFRA that is based on preamble repeated transmission, the indication message comprises one or more of the following: RACH resource configuration information, preamble repeated transmission enabling information, and information about a quantity of preamble repeated transmissions, and a RACH resource configured by using the RACH resource configuration information is located on an unlicensed spectrum.

23. The apparatus according to claim 22, wherein the indication message further comprises beam switching information, and the beam switching information indicates the terminal device to perform preamble repeated transmission through beam switching.

24. The apparatus according to any one of claims 14 to 23, wherein the apparatus further comprises:
a third processing unit, configured to: when a random access response RAR message sent by the access network device is received, stop the current round of random access attempt.

25. A coverage enhancement processing apparatus, used in an access network device, wherein the apparatus comprises:
a sending unit, configured to send an indication message to a terminal device, wherein the indication message indicates the terminal device to initiate a RACH that is based on preamble repeated transmission, the indication message comprises one or more of the following: RACH resource configuration information, preamble repeated transmission enabling information, and information about a quantity of preamble repeated transmissions, and a RACH resource configured by using the RACH resource configuration information is located on an unlicensed spectrum.

26. The apparatus according to claim 25, wherein the indication message further comprises beam switching information, and the beam switching information indicates the terminal device to perform preamble repeated transmission through beam switching.

27. A communication apparatus, comprising a processor and a memory, wherein the memory is configured to store program code, and when the program code is executed by the processor, the communication apparatus implements the method according to any one of claims 1 to 13.

28. A communication system, comprising one or more terminal devices and one or more access network devices, wherein the one or more terminal devices are communicatively connected to the one or more access network devices, the one or more terminal devices perform the method according to any one of claims 1 to 11, and the one or more access network devices perform the method according to claim 12 or 13.

29. A computer-readable storage medium, comprising instructions, wherein when the instructions are run on a computer, the computer is enabled to perform the method according to any one of claims 1 to 13.

30. A computer program, wherein the computer program comprises instructions, and when the computer program is executed by a computer, the computer is enabled to perform the method according to any one of claims 1 to 13.
